# EUROPEAN PATENT SPECIFICATION

(11) **EP 3 944 083 B1**
(45) Date of publication and mention of the grant of the patent: **27.05.2026**
(21) Application number: 20799568.9
(22) Date of filing: 21.04.2020
(51) Int. Cl.: G06F 9/46

(54) **CARD-RELATED PROCESSING METHOD AND APPARATUS**
VERFAHREN UND VORRICHTUNG ZUR KARTENBEZOGENEN VERARBEITUNG
PROCÉDÉ ET APPAREIL DE TRAITEMENT ASSOCIÉ À UNE CARTE

(30) Priority: 30.04.2019 CN 201910362356
(43) Date of publication of application: 26.01.2022
(73) Proprietor: Huawei Technologies Co., Ltd., Shenzhen, Guangdong 518129 (CN)
(72) Inventor: SONG, Lang, Shenzhen, Guangdong 518129 (CN)
(74) Representative: Maiwald GmbH
(86) International application number: PCT/CN2020/085816
(87) International publication number: WO 2020/221060

(56) References cited:
- EP-A2- 2 750 400
- CN-A- 104 216 618
- CN-A- 107 783 830
- CN-A- 110 262 877
- US-A1- 2014 282 110
- US-A1- 2016 188 363
- IPHONEHACKSTV: "Auxo: The Best App Switcher for iOS - iPhone Hacks", 31 August 2013 (2013-08-31), XP093139953, Retrieved from the Internet <URL:https://www.youtube.com/watch?v=mDnPMpbP1Dg> [retrieved on 20240311]

## Description

This application claims priority to Chinese Patent Application No. 201910362356.2, filed with the China National Intellectual Property Administration on April 30, 2019 and entitled "CARD PROCESSING METHOD AND DEVICE".

### TECHNICAL FIELD

Embodiments of this application relate to the field of electronic technologies, and in particular, to a card processing method and a device.

### BACKGROUND

With the development of electronic technologies, an electronic device such as a mobile phone or a tablet computer has increasingly powerful functions. A quantity of applications that are installed and used on the electronic device is increasing. A user needs to frequently switch between different applications to use different services and functions provided by the different applications.

A multitasking interface may include cards corresponding to a plurality of applications that have been started and run on the electronic device. The user may quickly switch between different applications by using the cards in the multitasking interface.

US 2014/0282110 A1 describes an electronic device displays a first application on the touch-sensitive display, the first application being one of a plurality of concurrently open applications on the electronic device. The device detects a first input and in response, displays a multitasking user interface that is configured to select an open application for viewing and is also configured to select one of a plurality of contactable users to communicate with. The multitasking user interface includes a set of open application affordances, wherein activation of a respective open application affordance selects a corresponding open application in the plurality of concurrently open applications for viewing, and a first set of contactable-user affordances, wherein activation of a respective contactable-user affordance initiates a process for communicating with a corresponding contactable-user.

Currently, how to manage the cards in the multitasking interface, for example, how to delete, add, or move a card, is a hot topic in current research.

### SUMMARY

Embodiments of this application provide a card processing method and a device, so that when a card is to be deleted, dynamic visual impact that a card flies into a screen can be provided for a user, to improve user experience. The invention is defined by the appended claims. Embodiments and examples not covered by the claims are meant to illustrate, and facilitate the understanding of, the claimed invention.

To achieve the foregoing objective, the following technical solutions are applied to the embodiments of this application.

According to one aspect, the embodiments of this application provide an electronic device, including one or more processors, a memory, and a touchscreen, configured to detect a touch operation of a user and display an interface. The memory stores code, and when the code is executed the one or more processors, the electronic device is enabled to perform the following steps: detecting an operation of opening a multitasking interface; displaying a first multitasking interface in response to the operation of opening a multitasking interface, where the first multitasking interface includes a first card, a second card, and a third card that are arranged in parallel along a first direction, and the first card, the second card, and the third card each correspond to a different application, the second card is located between the first card and the third card, the second card is fully displayed, the first card and the third card each are partially displayed, and displayed parts of the first card and the third card are parts close to the second card; detecting a swipe up operation performed by the user on a target card on the touchscreen, where the target card is the first card, the second card, or the third card; flipping the target card to the back of the touchscreen, where in a process in which the target card is flipped to the back of the touchscreen, content of the target card faces upward; deleting the target card; and moving a card adjacent to the target card along the first direction, to fill in an area that is left after the target card is deleted.

In this solution, to delete a card in the multitasking interface, the electronic device may flip the card to the back of the screen and then delete the card. In this way, the user is provided with dynamic visual experience that the card flies into the touchscreen and disappears.

In a possible design, when the code is executed by the one or more processors, the electronic device is further enabled to perform the following step: after deleting the target card, closing an application corresponding to the target card, and releasing resources occupied in the background by the application corresponding to the target card, where the resources include memory.

That is, when a card in the multitasking interface is deleted, an application corresponding to the card is also closed, and resources occupied by the application are also released (or deleted).

In another possible design, the first direction is substantially horizontal on the touchscreen.

That is, the first card, the second card, and the third card may be horizontally arranged left and right on the touchscreen.

In another possible design, the second card is located in the middle of the touchscreen.

In this way, the user can conveniently view the second card that is fully displayed.

In another possible design, that when the code is executed by the one or more processors, the electronic device is enabled to flip the target card to the back of the touchscreen is specifically: flipping the target card to the back of the touchscreen based on a distance by which the user swipes up on the target card on the touchscreen, where an angle by which the target card is flipped to the back of the touchscreen is directly proportional to the distance by which the user swipes up.

In this way, a longer distance by which the user swipes up indicates a larger angle by which the target card is flipped, and a shorter distance by which the user swipes up indicates a smaller angle by which the target card is flipped. The target card may be flipped as a hand swipes, so that use experience of the user can be improved.

In another possible design, that when the code is executed by the one or more processors, the electronic device is enabled to delete the target card is specifically: automatically deleting the target card after the angle by which the target card is flipped to the back of the touchscreen is greater than or equal to a first preset angle.

That is, the target card automatically disappears after the target card is flipped by a specific angle.

In another possible design, that when the code is executed by the one or more processors, the electronic device is enabled to delete the target card is specifically: deleting the target card after the angle by which the target card is flipped to the back of the touchscreen is greater than or equal to a first preset angle and it is detected that the user's hand leaves the touchscreen.

In this way, the target card disappears only after the target card is flipped by a specific angle and the user's hand leaves the touchscreen.

In another possible design, when the code is executed by the one or more processors, the electronic device is further enabled to perform the following steps: if it is detected that after swiping up on the target card, the user's hand does not leave the touchscreen but swipes down, flipping the target card back to the front of the touchscreen based on a distance by which the user swipes down, where in a process in which the target card is flipped back to the front of the touchscreen, the content of the target card faces upward, and an angle by which the target card is flipped to the front of the touchscreen is directly proportional to the distance by which the user swipes down; and if the target card is flipped back to a state that exists before the target card is flipped to the back of the touchscreen, stopping flipping the target card to the front of the touchscreen.

In this solution, after the target card is flipped to the back of the touchscreen, the target card may further be flipped back to the front of the touchscreen as the user continues to swipe down, so that user experience can be improved, and the card can be further prevented, in time. from being mistakenly deleted.

In another possible design, the target card is the second card, and when the code is executed by the one or the more processors, the electronic device is further enabled to perform the following step: if a swipe up operation performed by the user on another card in the first multitasking interface on the touchscreen is detected, prompting the user that the another card cannot be deleted, where the another card is the first card or the third card.

In this solution, only the second card that is fully displayed between the first card and the third card can be deleted, and a card that is partially displayed at the edge cannot be deleted.

In another possible design, the target card is the second card, and when the code is executed by the one or the more processors, the electronic device is further enabled to perform the following steps: if a swipe up operation performed by the user on another card in the first multitasking interface on the touchscreen is detected, prompting the user to move the another card, where the another card is the first card or the third card; if a swipe operation performed by the user on the touchscreen along the first direction is detected, moving the first card, the second card, and the third card, so that the another card is fully displayed; flipping the another card to the back of the touchscreen after detecting the swipe up operation performed by the user on the another card on the touchscreen; and deleting the another card.

In this solution, only the second card that is fully displayed between the first card and the third card can be deleted, and a card that is partially displayed at the edge can be deleted only after the card is moved and is fully displayed.

In another possible design, in the first multitasking interface, edges of each of the first card, the second card, and the third card are parallel to edges of the electronic device; or in the first multitasking interface, edges of the second card are parallel to edges of the electronic device, the first card is moved counterclockwise relative to the second card by a second preset angle, and the third card is moved clockwise relative to the second card by the second preset angle; or in the first multitasking interface, edges of the second card are parallel to edges of the electronic device, the first card is moved clockwise relative to the second card by a second preset angle, and the third card is moved counterclockwise relative to the second card by the second preset angle; or in the first multitasking interface, edges of the second card are parallel to edges of the electronic device, and the first card and the third card each are rotated to the back of the touchscreen by a third preset angle; or in the first multitasking interface, edges of the second card are parallel to edges of the electronic device, and the first card and the third card each are rotated to the front of the touchscreen by a third preset angle; or in the first multitasking interface, edges of the second card are parallel to edges of the electronic device, and the first card and the third card each are rotated to the front or the back of the touchscreen by a third preset angle.

That is, in the multitasking interface, a plurality of cards may be arranged in a plurality of manners.

In another possible design, that when the code is executed by the one or more processors, the electronic device is enabled to detect the operation of opening a multitasking interface is specifically: when a user interface of an application corresponding to the third card is displayed, detecting the operation of opening a multitasking interface.

In this way, after the electronic device enters a multitasking interface from the application corresponding to the third card, the user may want to open another application. The electronic device fully displays the second card corresponding to the previously opened application, and displays the second card between the first card and the second card, so that the user can quickly view and operate the second card.

In another possible design, after the first multitasking interface is displayed, a home screen is displayed if an operation of displaying a home screen is detected. A second multitasking interface is displayed if an operation of opening a multitasking interface is detected, where the second multitasking interface includes the second card and the third card that are arranged in parallel along the first direction, the third card is fully displayed, and a part that is of the second card and that is close to the third card is displayed.

In this way, after the electronic device enters a multitasking interface from the home screen, the user may want to open a last opened application. The electronic device fully displays the third card corresponding to the last opened application, so that the user can better view and operate the third card.

In another possible design, when the code is executed by the one or more processors, the electronic device is further enabled to perform the following steps: after the first multitasking interface is displayed, if an operation of deleting all cards is detected, separately flipping the first card, the second card, and the third card to the back of the touchscreen in response to the operation of deleting all cards, where in a process in which the first card, the second card, and the third card are flipped to the back of the touchscreen, content of the first card, the second card, and the third card faces upward; and deleting the first card, the second card, and the third card after angles by which the first card, the second card, and the third card are flipped to the back of the touchscreen are greater than or equal to a fourth preset angle.

In this solution, to delete all cards in a multitasking interface, the electronic device may flip all the cards to the back of the screen and then delete all the cards. In this way, the user is provided with dynamic visual experience that all the cards fly into the touchscreen and disappear.

In another possible design, when the code is executed by the one or more processors, the electronic device is further enabled to perform the following steps: after the first multitasking interface is displayed, if an operation of deleting all cards is detected, successively flipping the first card, the second card, and the third card to the back of the touchscreen in a preset order in response to the operation of deleting all cards, where in a process in which the first card, the second card, and the third card are flipped to the back of the touchscreen, content of the first card, the second card, and the third card faces upward; and successively deleting the first card, the second card, and the third card after angles by which the first card, the second card, and the third card are flipped to the back of the touchscreen are greater than or equal to a fourth preset angle.

In this solution, to delete all cards in a multitasking interface, the electronic device may successively flip all the cards to the back of the screen and then delete all the cards. In this way, the user is provided with dynamic visual experience that all the cards fly into the touchscreen and disappear one after another.

In another possible design, when the code is executed by the one or more processors, the electronic device is further enabled to perform the following step: after deleting the first card, the second card, and the third card, closing applications corresponding to all the cards, and releasing resources occupied in the background by the applications corresponding to all the cards, where the resources include memory.

That is, when all the cards in the multitasking interface are deleted, the applications corresponding to all the cards are also closed, and resources occupied by the applications corresponding to all the cards are also released.

In another possible design, when the code is executed by the one or more processors, the electronic device is further enabled to perform the following step: displaying the home screen after deleting the first card, the second card, and the third card.

That is, the electronic device may automatically display the home screen after deleting all the cards in the multitasking interface.

According to another aspect, the embodiments of this application provide a card processing method, applied to an electronic device having a touchscreen. The method includes: The electronic device detects an operation of opening a multitasking interface. The electronic device displays a first multitasking interface in response to the operation of opening a multitasking interface, where the first multitasking interface includes a first card, a second card, and a third card that are arranged in parallel along a first direction, and the first card, the second card, and the third card each correspond to a different application, the second card is located between the first card and the third card, the second card is fully displayed, the first card and the third card each are partially displayed, and displayed parts of the first card and the third card are parts close to the second card. The electronic device detects a swipe up operation performed by a user on a target card on the touchscreen. The target card is the first card, the second card, or the third card. The electronic device flips the target card to the back of the touchscreen, where in a process in which the target card is flipped to the back of the touchscreen, content of the target card faces upward. The electronic device deletes the target card. The electronic device moves a card adjacent to the target card along the first direction, to fill in an area that is left after the target card is deleted.

In this solution, to delete a card in the multitasking interface, the electronic device may flip the card to the back of the screen and then delete the card. In this way, the user is provided with dynamic visual experience that the card flies into the touchscreen and disappears.

In a possible design, after the deleting the target card, the method further includes: The electronic device closes an application corresponding to the target card, and releases resources occupied in the background by the application corresponding to the target card, where the resources comprise memory.

In another possible design, the first direction is substantially horizontal on the touchscreen.

In another possible design, that the electronic device flips the target card to the back of the touchscreen specifically includes: The electronic device flips the target card to the back of the touchscreen based on a distance by which the user swipes up on the target card on the touchscreen. An angle by which the target card is flipped to the back of the touchscreen is directly proportional to the distance by which the user swipes up.

In another possible design, that the electronic device deletes the target card specifically includes: The electronic device automatically deletes the target card after the angle by which the target card is flipped to the back of the touchscreen is greater than or equal to a first preset angle.

In another possible design, that the electronic device deletes the target card specifically includes: The electronic device deletes the target card after the angle by which the target card is flipped to the back of the touchscreen is greater than or equal to a first preset angle and it is detected that the user's hand leaves the touchscreen.

In another possible design, the method further includes: If the electronic device detects that after swiping up on the target card, the user's hand does not leave the touchscreen but swipes down, the electronic device flips the target card back to the front of the touchscreen based on a distance by which the user swipes down. In a process in which the target card is flipped back to the front of the touchscreen, the content of the target card faces upward, and an angle by which the target card is flipped to the front of the touchscreen is directly proportional to the distance by which the user swipes down. If the target card is flipped back to a state that exists before the target card is flipped to the back of the touchscreen, the electronic device stops flipping the target card to the front of the touchscreen.

In another possible design, the target card is the second card, and the method further includes: If the electronic device detects a swipe up operation performed by the user on another card in the first multitasking interface on the touchscreen, the electronic device prompts the user that the another card cannot be deleted, where the another card is the first card or the third card.

In another possible design, the target card is the second card, and the method further includes: If the electronic device detects a swipe up operation performed by the user on another card in the first multitasking interface on the touchscreen, the electronic device prompts the user to move the another card, where the another card is the first card or the third card. If the electronic device detects a swipe operation performed by the user on the touchscreen along the first direction, the electronic device moves the first card, the second card, and the third card, so that the another card is fully displayed. The electronic device flips the another card to the back of the touchscreen after detecting the swipe up operation performed by the user on the another card on the touchscreen. The electronic device deletes the another card.

In another possible design, in the first multitasking interface, edges of each of the first card, the second card, and the third card are parallel to edges of the electronic device; or in the first multitasking interface, the first card is moved counterclockwise relative to the second card by a second preset angle, and the third card is moved clockwise relative to the second card by the second preset angle; or in the first multitasking interface, the first card is moved clockwise relative to the second card by a second preset angle, and the third card is moved counterclockwise relative to the second card by the second preset angle; or in the first multitasking interface, edges of the second card are parallel to edges of the electronic device, and the first card and the third card each are rotated to the back of the touchscreen by a third preset angle; or in the first multitasking interface, edges of the second card are parallel to edges of the electronic device, and the first card and the third card each are rotated to the front of the touchscreen by a third preset angle; or in the first multitasking interface, edges of the second card are parallel to edges of the electronic device, and the first card and the third card each are rotated to the front or the back of the touchscreen by a third preset angle.

In another possible design, that the electronic device detects an operation of opening a multitasking interface specifically includes: When displaying a user interface of an application corresponding to the third card, the electronic device detects the operation of opening a multitasking interface.

In another possible design, after the electronic device displays the first multitasking interface, the method further includes: If the electronic device detects an operation of displaying a home screen, the electronic device displays the home screen. If the electronic device detects an operation of opening a multitasking interface, the electronic device displays a second multitasking interface. The second multitasking interface includes the second card and the third card that are arranged in parallel along the first direction, the third card is fully displayed, and a part that is of the second card and that is close to the third card is displayed.

In another possible design, after the electronic device displays the first multitasking interface, the method further includes: If the electronic device detects an operation of deleting all cards, the electronic device separately flips the first card, the second card, and the third card to the back of the touchscreen in response to the operation of deleting all cards, where in a process in which the first card, the second card, and the third card are flipped to the back of the touchscreen, content of the first card, the second card, and the third card faces upward; and the electronic device deletes the first card, the second card, and the third card after angles by which the first card, the second card, and the third card are flipped to the back of the touchscreen are greater than or equal to a fourth preset angle.

In another possible design, after the electronic device displays the first multitasking interface, the method further includes: If the electronic device detects an operation of deleting all cards, the electronic device successively flips the first card, the second card, and the third card to the back of the touchscreen in a preset order in response to the operation of deleting all cards, where in a process in which the first card, the second card, and the third card are flipped to the back of the touchscreen, content of the first card, the second card, and the third card faces upward; and the electronic device successively deletes the first card, the second card, and the third card after angles by which the first card, the second card, and the third card are flipped to the back of the touchscreen are greater than or equal to a fourth preset angle.

In a possible design, after the electronic device deletes the first card, the second card, and the third card, the method further includes: The electronic device closes applications corresponding to all the cards, and releases resources occupied in the background by the applications corresponding to all the cards, where the resources include memory.

In another possible design, after the electronic device deletes the first card, the second card, and the third card, the method further includes: The electronic device displays the home screen.

According to another aspect, the embodiments of this application provide a card processing apparatus. The apparatus is included in an electronic device, and the apparatus has a function of implementing behavior of the electronic device in a method in any one of the foregoing aspects and possible implementations. The function may be implemented by hardware, or may be implemented by hardware executing corresponding software. The hardware or the software includes at least one module or unit corresponding to the function, for example, a detection module or unit, a display module or unit, a flipping module or unit, a deletion module or unit, and a moving module or unit.

According to another aspect, the embodiments of this application provide a computer storage medium, including computer instructions. When the computer instructions are run on an electronic device, the electronic device is enabled to perform the card processing method according to any possible implementation of any one of the foregoing aspects.

According to still another aspect, the embodiments of this application provide a computer program product. When the computer program product is run on a computer, the computer is enabled to perform the card processing method according to any possible implementation of any one of the foregoing aspects.

### BRIEF DESCRIPTION OF DRAWINGS

FIG. 1 is a schematic diagram of a structure of a mobile phone according to an embodiment of this application;
FIG. 2A and FIG. 2B are schematic diagrams of a group of operations of opening a multitasking interface according to an embodiment of this application;
FIG. 3A and FIG. 3B are schematic diagrams of a group of interfaces according to an embodiment of this application;
FIG. 4 is a schematic diagram of an interface according to an embodiment of this application;
FIG. 5A and FIG. 5B are schematic diagrams of another group of interfaces according to an embodiment of this application;
FIG. 6 is a schematic diagram of another interface according to an embodiment of this application;
FIG. 7A and FIG. 7B are schematic diagrams of another group of interfaces according to an embodiment of this application;
FIG. 8A to FIG. 8D are schematic diagrams of another group of interfaces according to an embodiment of this application;
FIG. 9A and FIG. 9B are schematic diagrams of another group of interfaces according to an embodiment of this application;
FIG. 10A and FIG. 10B are schematic diagrams of another group of interfaces according to an embodiment of this application;
FIG. 11(a) and FIG. 11(b) are schematic diagrams of another group of interfaces according to an embodiment of this application;
FIG. 12A-1 to FIG. 12A-4 are schematic diagrams of another group of interfaces according to an embodiment of this application;
FIG. 12B-1 to FIG. 12B-5 are schematic diagrams of another group of interfaces according to an embodiment of this application;

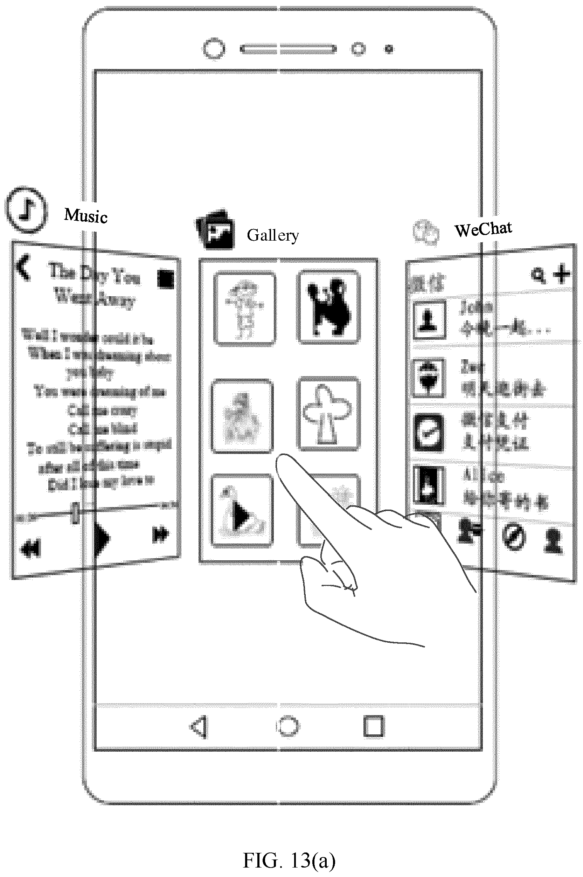

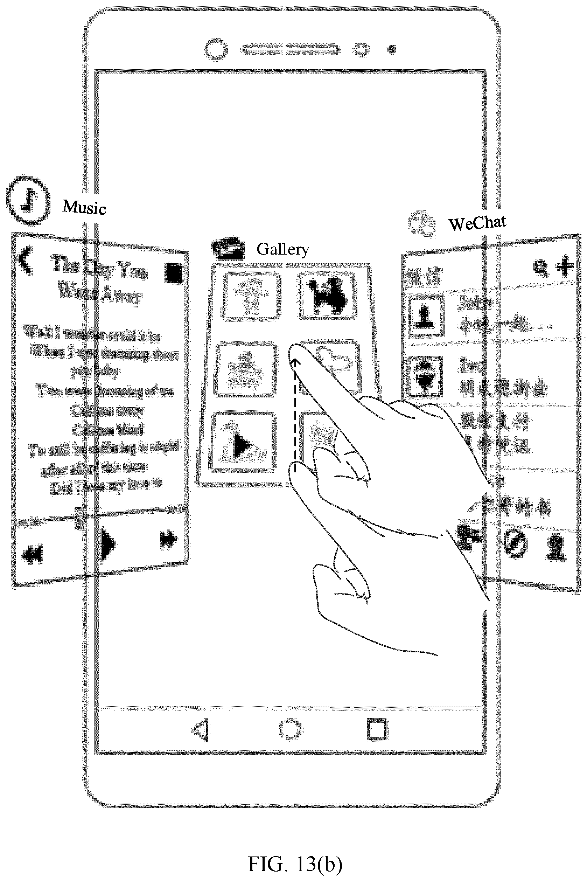

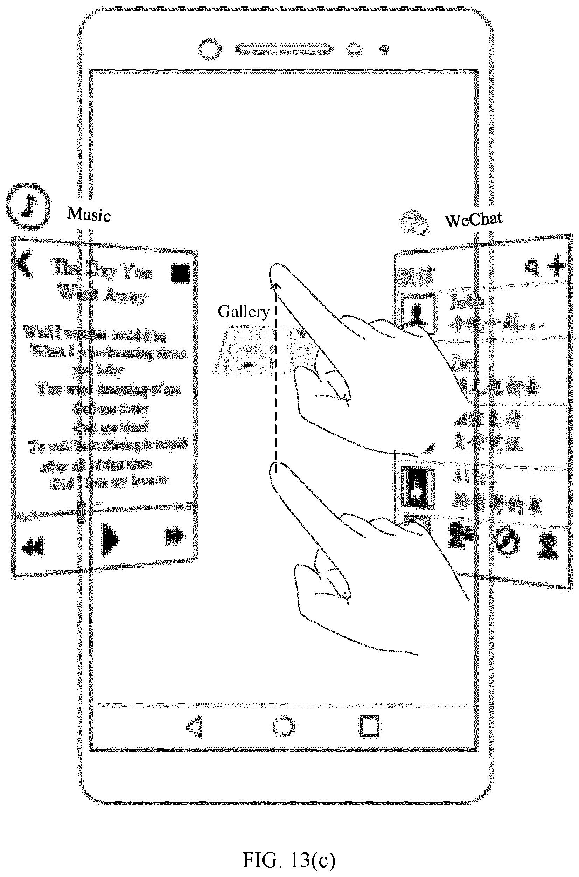

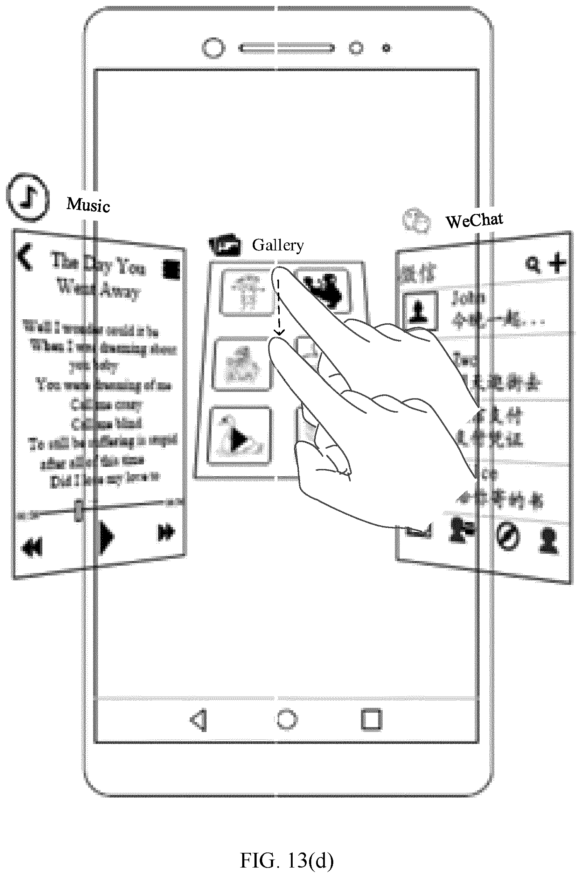

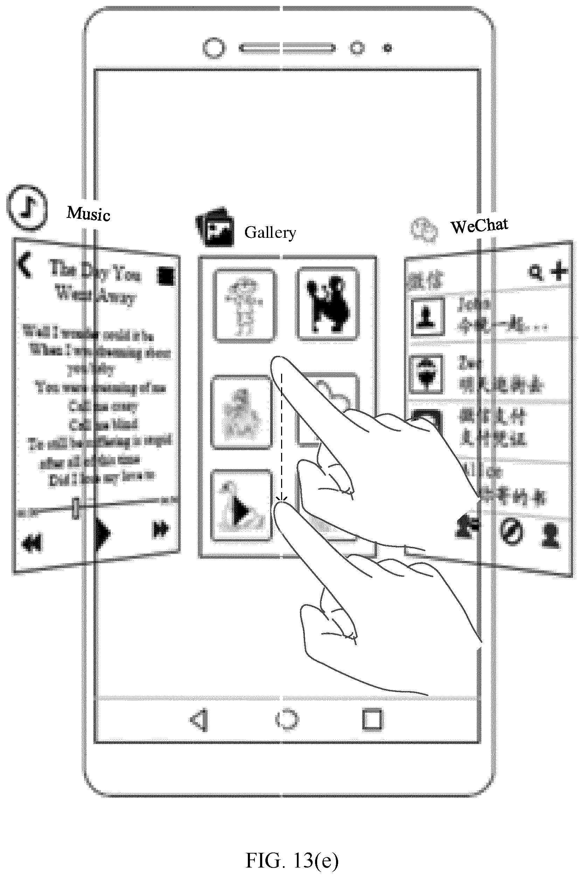

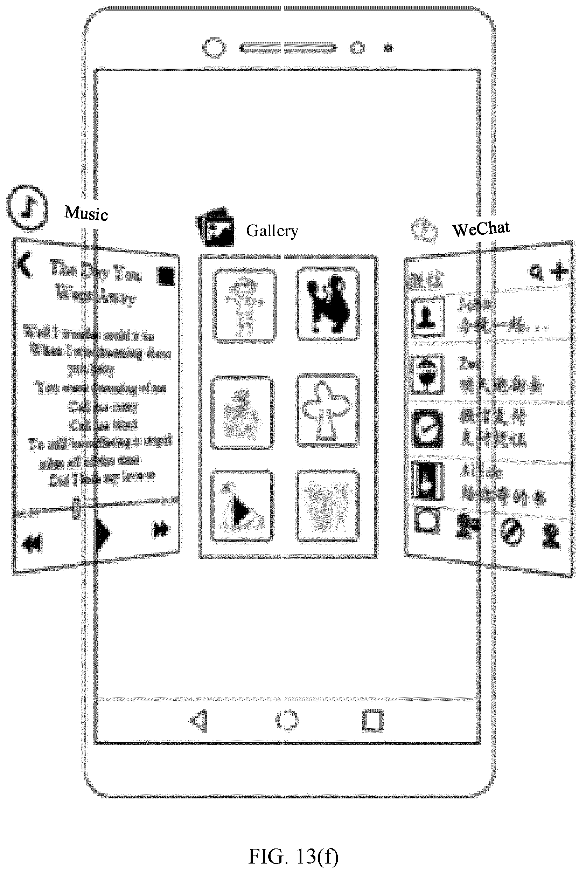

FIG. 13(a) to FIG. 13(f) are schematic diagrams of another group of interfaces according to an embodiment of this application;

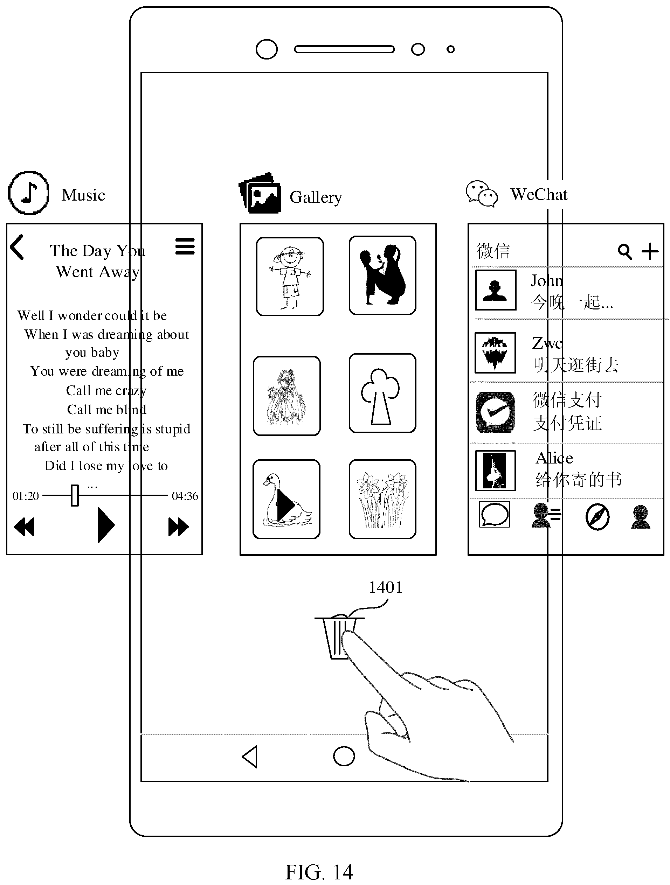

FIG. 14 is a schematic diagram of another interface according to an embodiment of this application;

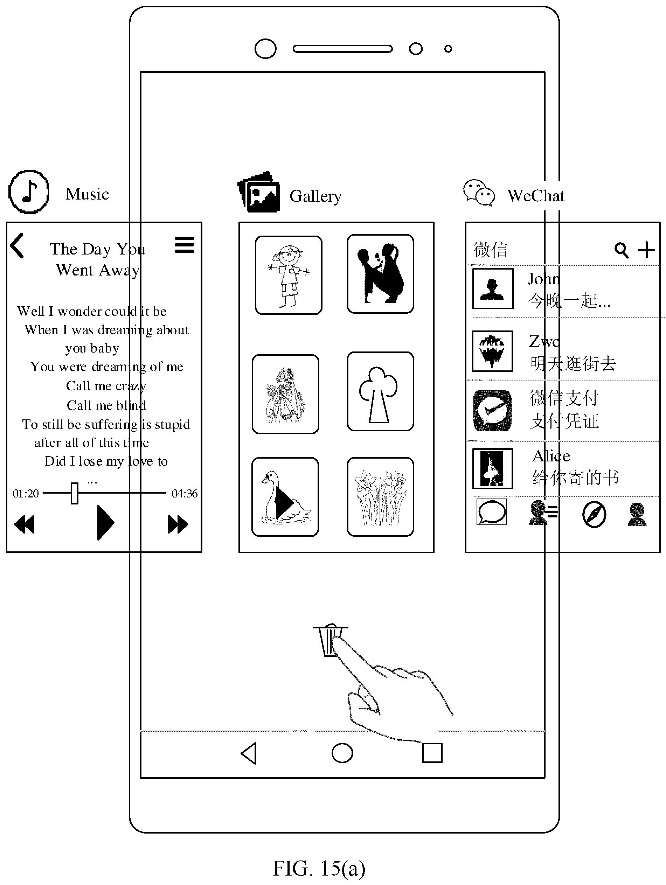

FIG. 15(a) to FIG. 15(c) are schematic diagrams of another group of interfaces according to an embodiment of this application;

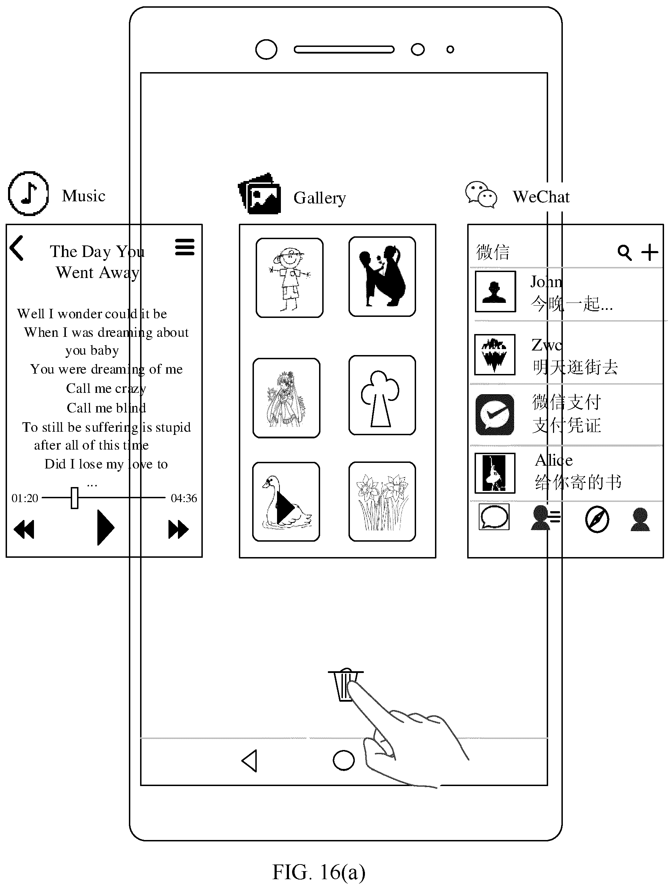

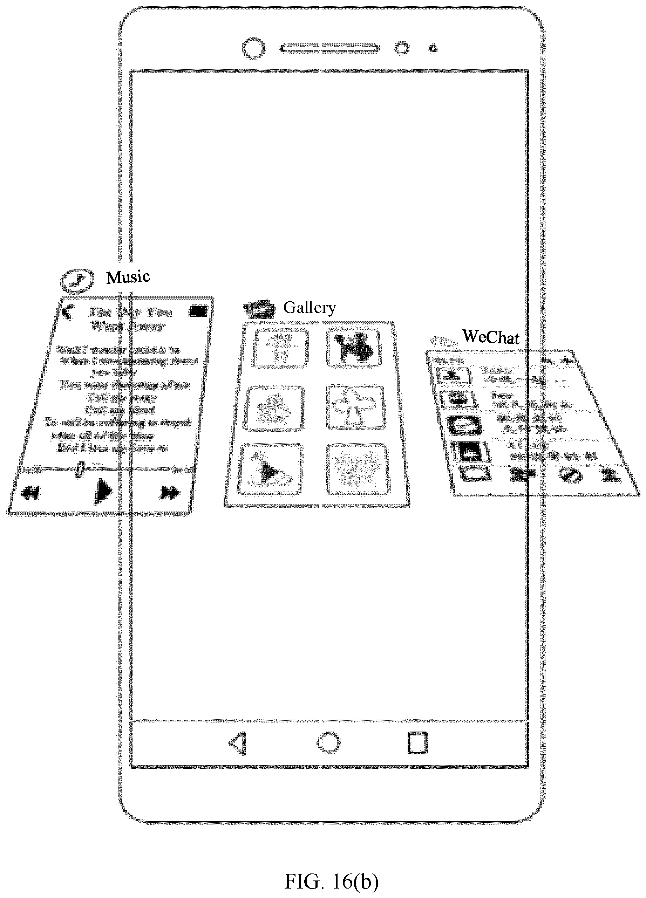

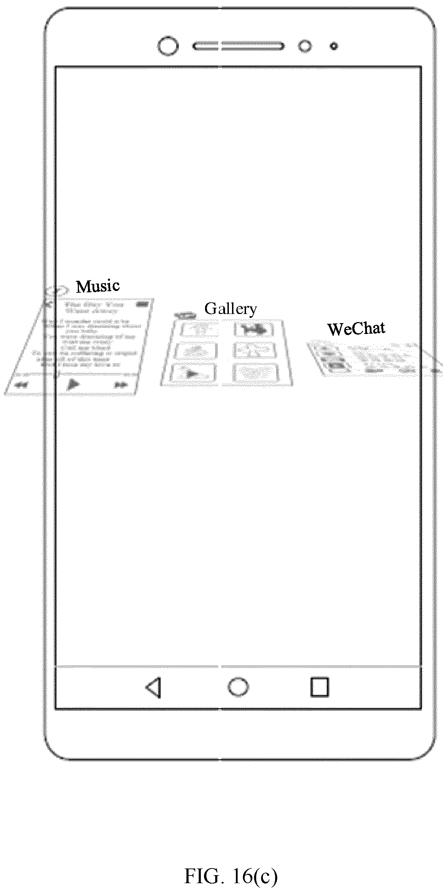

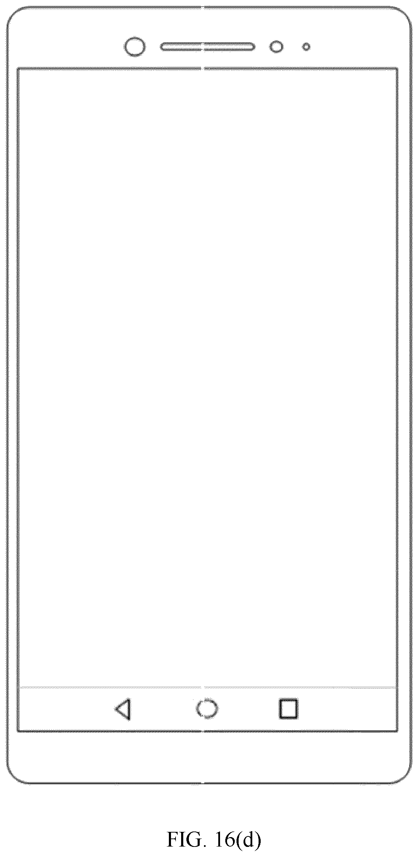

FIG. 16(a) to FIG. 16(d) are schematic diagrams of another group of interfaces according to an embodiment of this application;

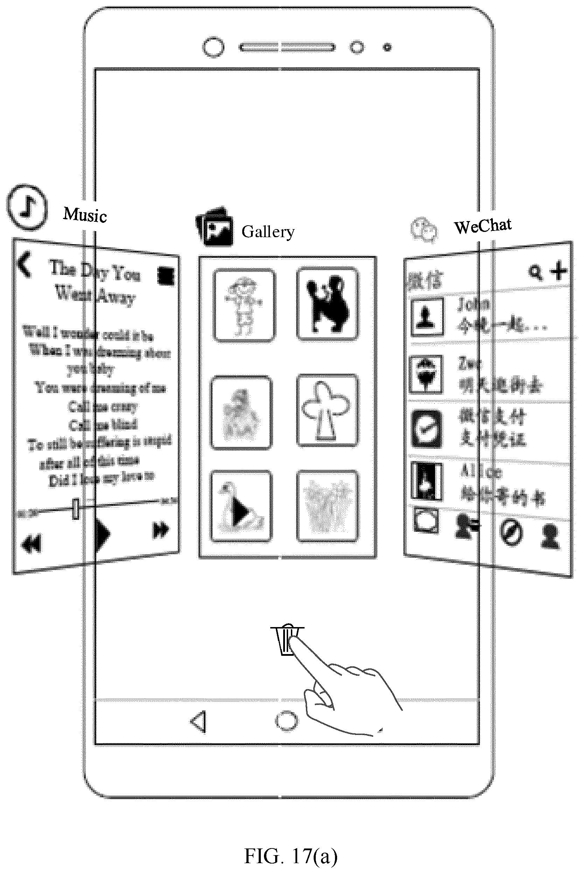

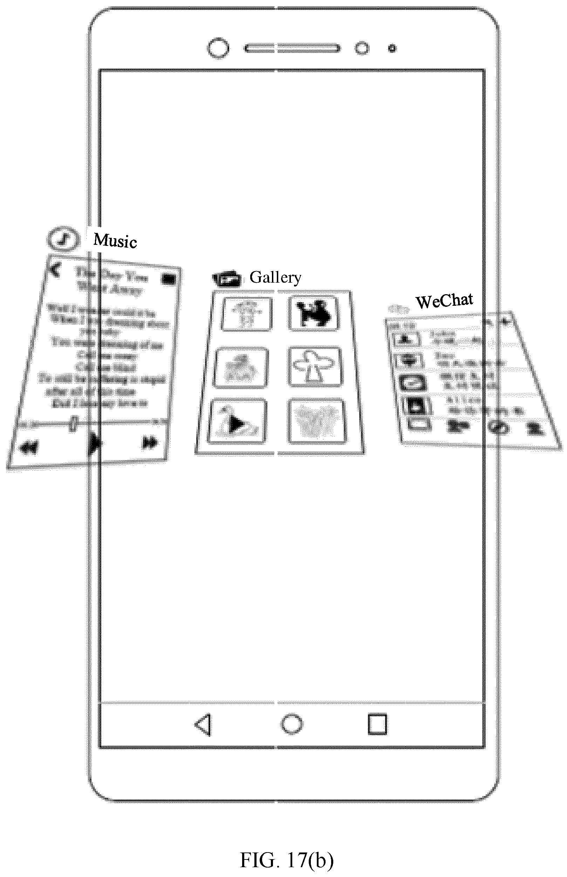

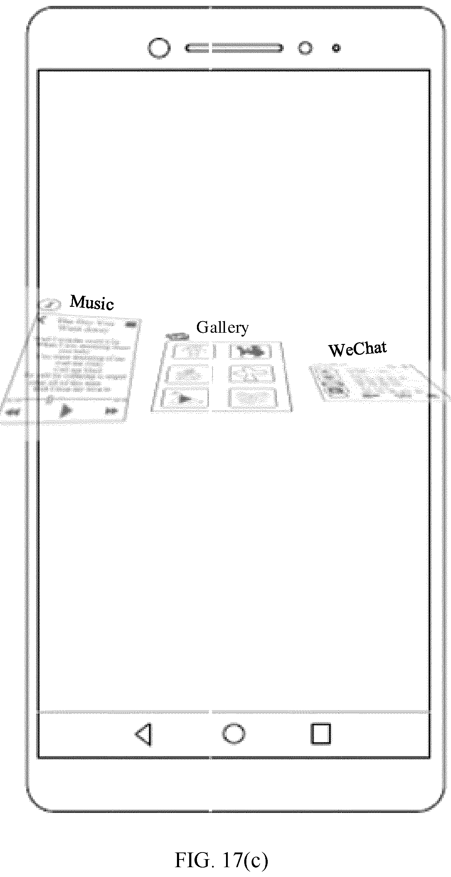

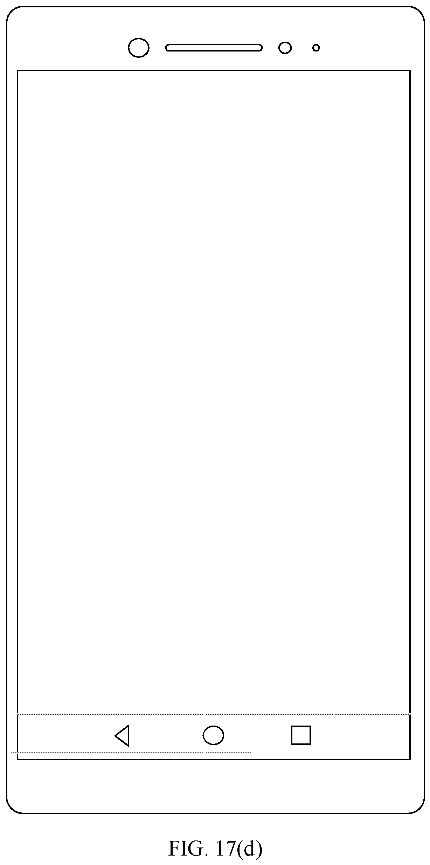

FIG. 17(a) to FIG. 17(d) are schematic diagrams of another group of interfaces according to an embodiment of this application;

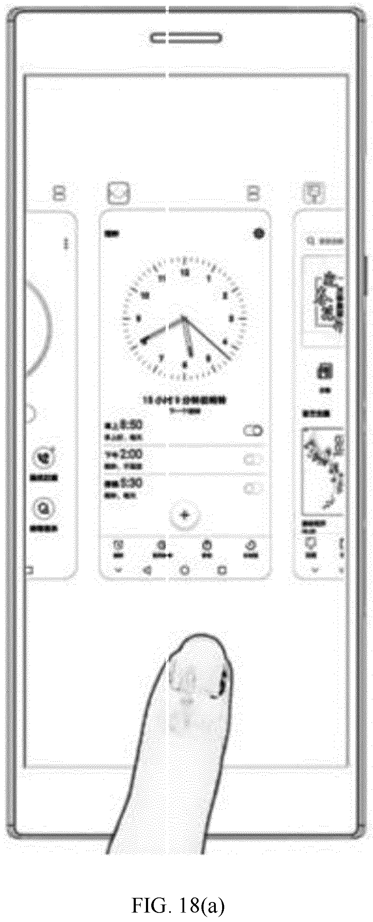

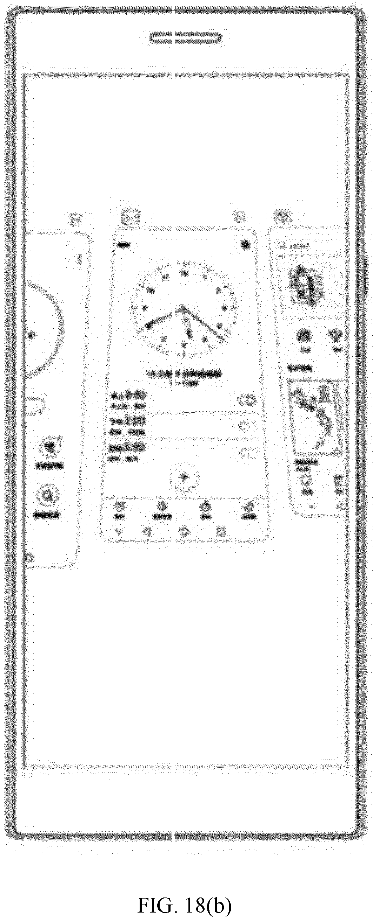

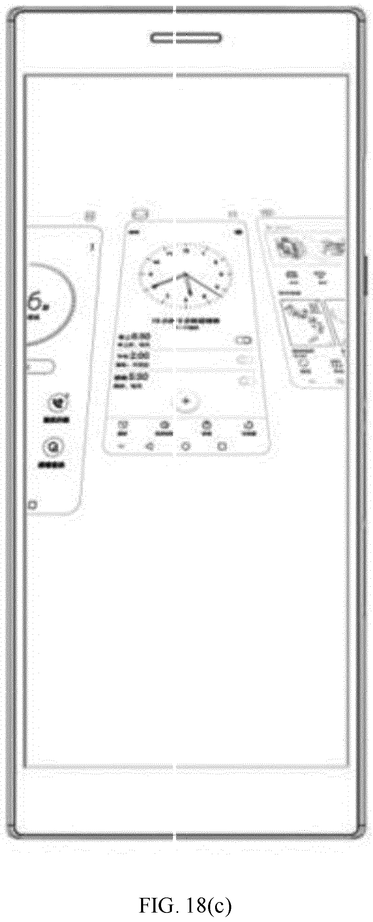

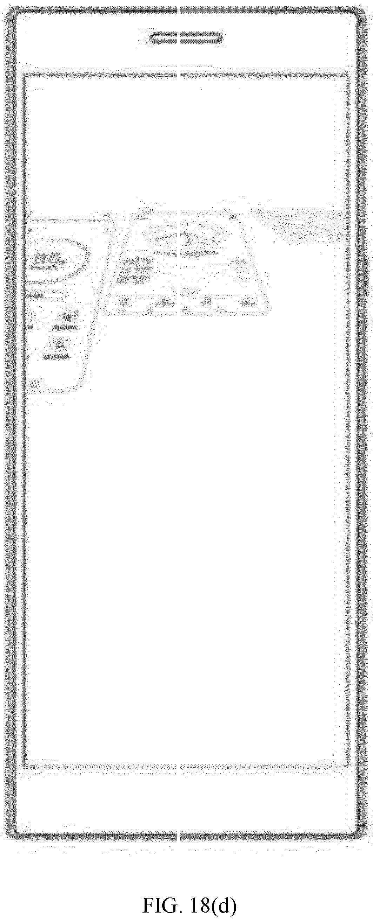

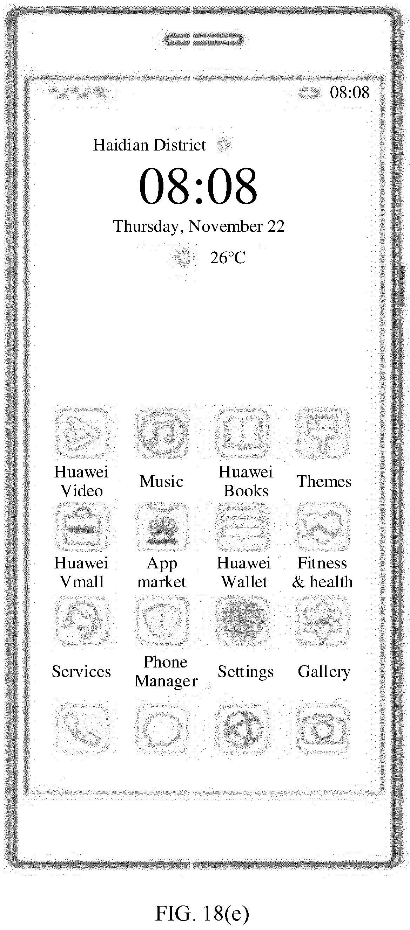

FIG. 18(a) to FIG. 18(e) are schematic diagrams of another group of interfaces according to an embodiment of this application;

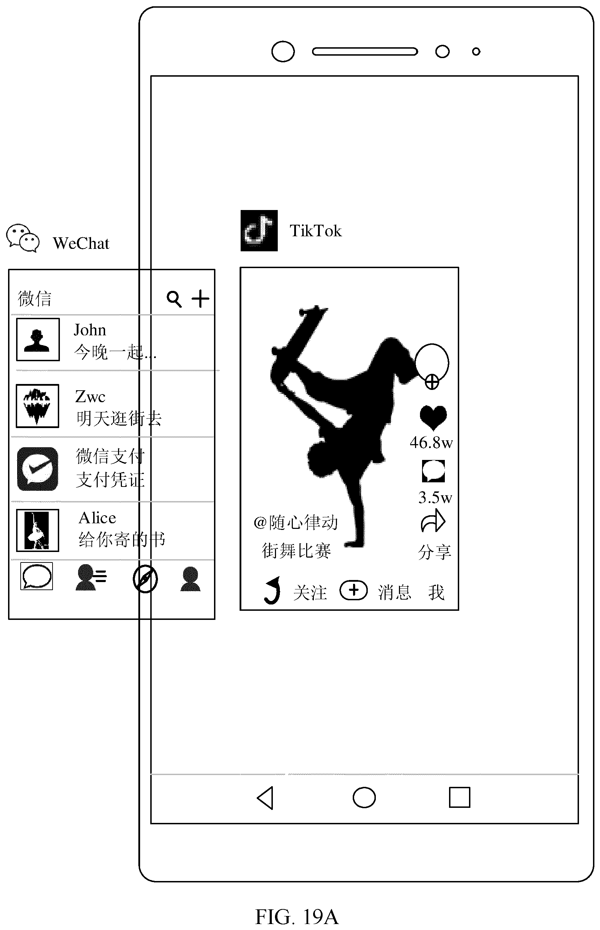

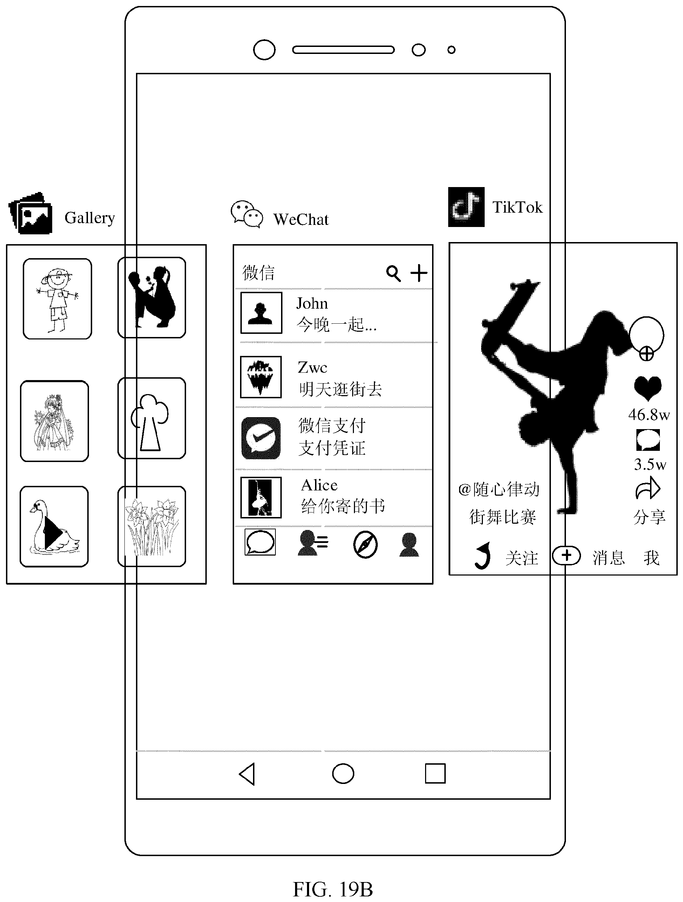

FIG. 19A and FIG. 19B are schematic diagrams of another group of interfaces according to an embodiment of this application;

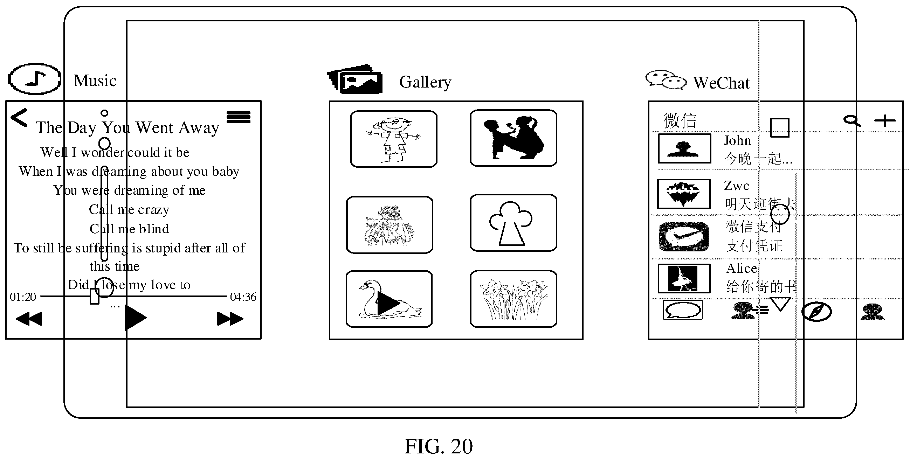

FIG. 20 is a schematic diagram of another interface according to an embodiment of this application; and

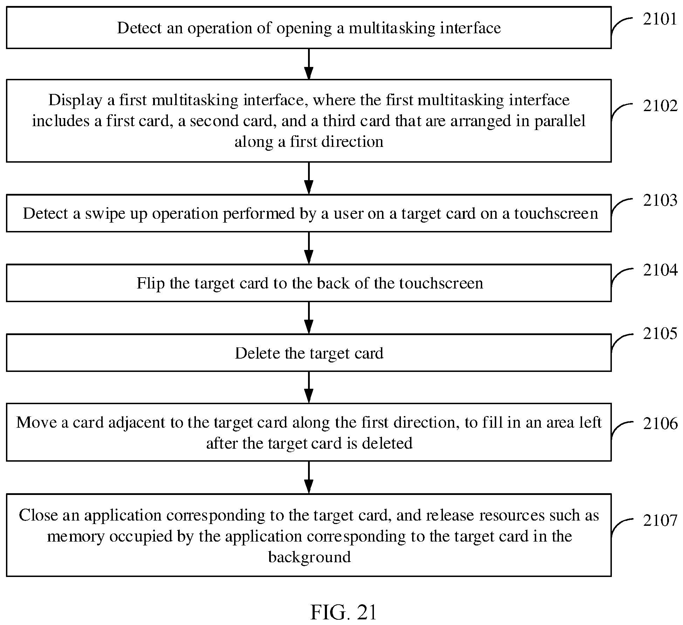

FIG. 21 is a flowchart of a card processing method according to an embodiment of this application.

### DESCRIPTION OF EMBODIMENTS

The following describes the technical solutions in the embodiments of this application with reference to the accompanying drawings in the embodiments of this application. In descriptions of the embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of the embodiments of this application, "a plurality of" means two or more than two.

The embodiments of this application provide a card processing method, which may be applied to an electronic device. The electronic device is a device that can simultaneously run a plurality of tasks. The tasks may include an application (or referred to as application software), a document, a page, or any other activity that may be performed by the electronic device. The electronic device may display cards corresponding to a plurality of currently running tasks. The card is an area that is on a screen of the electronic device and that includes information related to a task or generated by a task. A user may view, move, delete, or add the card.

After detecting an operation of tapping a card by the user, the electronic device may enter a task corresponding to the card, and display a user interface of the task in full screen. For example, a user interface of an application may be a main page of the application, an interface recently displayed in the foreground, a login interface, or an interface frequently used by the user. Displaying the user interface of the task in full screen means that the user interface of the task basically fills the entire screen of the electronic device. Some areas of the screen may be reserved for a status indicator, a notification message, and the like.

Each card may correspond to one task, and each task may correspond to one or more cards. For example, a Settings application may correspond to two cards, and different cards may correspond to different tasks in the Settings application. After detecting an operation of tapping one card by the user, the electronic device may enter a Bluetooth setting task of the Settings application, and display a Bluetooth setting interface. After detecting an operation of tapping the other card by the user, the electronic device may enter a permission management task of the Settings application, and display a permission management interface.

For example, the electronic device may be a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in the embodiments of this application.

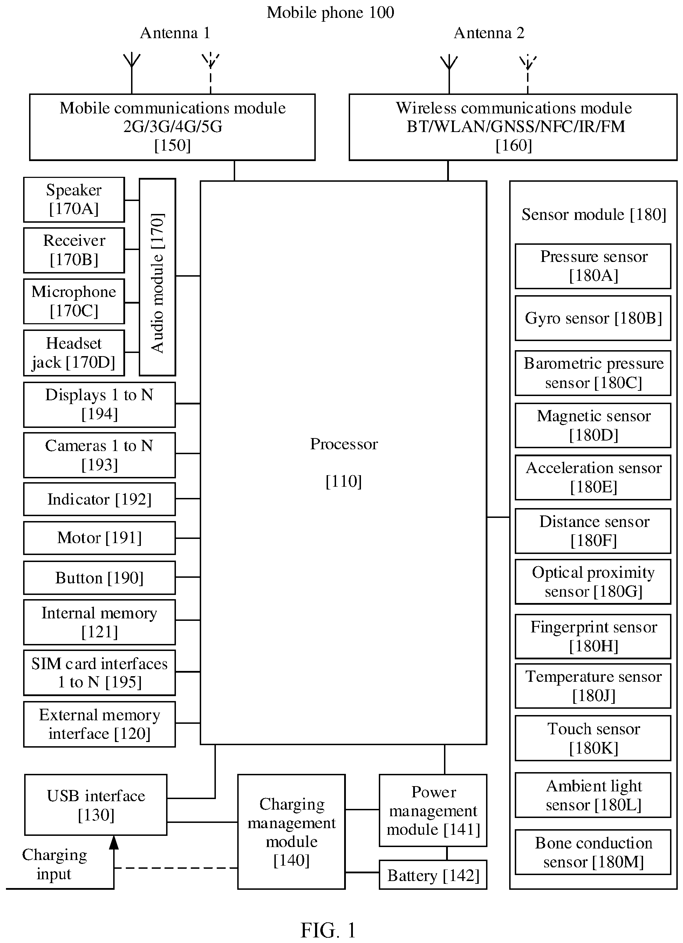

For example, the electronic device is a mobile phone. FIG. 1 is a schematic diagram of a structure of a mobile phone 100. The mobile phone 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the mobile phone 100. In some other embodiments of this application, the mobile phone 100 may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural network processing unit (neural-network processing unit, NPU). Different processing units may be independent components, or may be integrated into one or more processors. The processor 110 may simultaneously run a plurality of tasks (for example, applications), to provide a plurality of services and functions for a user.

The controller may be a nerve center and a command center of the mobile phone 100. The controller may generate an operation control signal based on instruction operation code and a time sequence signal, to control to read instructions and execute instructions.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access and reduces waiting time of the processor 110. Therefore, system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash light, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the mobile phone 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communications module 160 through the I2S interface, to implement a function of answering a call by using a Bluetooth headset.

The PCM interface may also be configured to perform audio communication, and sample, quantize, and code an analog signal. In some embodiments, the audio module 170 may be coupled to the wireless communications module 160 through the PCM bus interface. In some embodiments, the audio module 170 may alternatively transmit an audio signal to the wireless communications module 160 through the PCM interface, to implement the function of answering a call by using the Bluetooth headset. Both the I2S interface and the PCM interface may be configured to perform audio communication.

The UART interface is a universal serial data bus, and is used for asynchronous communication. The bus may be a two-way communications bus, and converts to-be-transmitted data between serial communication and parallel communication. In some embodiments, the UART interface is usually configured to connect the processor 110 to the wireless communications module 160. For example, the processor 110 communicates with a Bluetooth module in the wireless communications module 160 through the UART interface, to implement a Bluetooth function. In some embodiments, the audio module 170 may transmit an audio signal to the wireless communications module 160 through the UART interface, to implement a function of playing music by using the Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the mobile phone 100. The processor 110 communicates with the display 194 through the DSI interface, to implement a display function of the mobile phone 100.

The GPIO interface may be configured by using software. The GPIO interface may be configured as a control signal or a data signal. In some embodiments, the GPIO interface may be configured to connect the processor 110 to the camera 193, the display 194, the wireless communications module 160, the audio module 170, the sensor module 180, and the like. The GPIO interface may alternatively be configured as the I2C interface, the I2S interface, the UART interface, the MIPI interface, or the like.

The USB interface 130 is an interface that conforms to a USB standard specification, and may be specifically a mini USB interface, a micro USB interface, a USB Type C interface, or the like. The USB interface 130 may be configured to connect to a charger to charge the mobile phone 100, may be configured to transmit data between the mobile phone 100 and a peripheral device, may be configured to connect to a headset to play audio by using the headset, or may be configured to connect to another electronic device such as an AR device.

It may be understood that an interface connection relationship between the modules shown in the embodiments of this application is merely an example for description, and does not constitute a limitation on the structure of the mobile phone 100. In some other embodiments of this application, the mobile phone 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input from the wired charger through the USB interface 130. In some embodiments of wireless charging, the charging management module 140 may receive a wireless charging input by using a wireless charging coil of the mobile phone 100. The charging management module 140 may further supply power to the electronic device by using the power management module 141 while charging the battery 142.

The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communications module 160, and the like. The power management module 141 may further be configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the mobile phone 100 may be implemented through the antenna 1, the antenna 2, the mobile communications module 150, the wireless communications module 160, the modem processor, the baseband processor, and the like.

The antenna 1 and the antenna 2 each are configured to transmit and receive electromagnetic wave signals. Each antenna in the mobile phone 100 may be configured to cover one or more communication bands. Different antennas may be further multiplexed, to increase antenna utilization. For example, the antenna 1 may be multiplexed as a diversity antenna in a wireless local area network. In other embodiments, the antenna may be used in combination with a tuning switch.

The mobile communications module 150 may provide a wireless communication solution that includes 2G/3G/4G/5G or the like and that is applied to the mobile phone 100. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering and amplification on the received electromagnetic wave, and transmit the processed electromagnetic wave to the modem processor for demodulation. The mobile communications module 150 may further amplify a signal modulated by the modem processor, and convert an amplified signal into an electromagnetic wave through the antenna 1 for radiation. In some embodiments, at least some functional modules of the mobile communications module 150 may be disposed in the processor 110. In some embodiments, at least some functional modules in the mobile communications module 150 may be disposed in a same device as at least some modules in the processor 110.

The modem processor may include a modulator and a demodulator. The modulator is configured to modulate a low frequency baseband signal to be sent into a medium and high frequency signal. The demodulator is configured to demodulate a received electromagnetic wave signal into a low frequency baseband signal. Then, the demodulator transmits the low frequency baseband signal obtained through demodulation to the baseband processor for processing. The low-frequency baseband signal is processed by the baseband processor, and then transmitted to the application processor. The application processor outputs a sound signal by using an audio device (which is not limited to the speaker 170A, the receiver 170B, or the like), or displays an image or a video through the display 194. In some embodiments, the modem processor may be an independent component. In some other embodiments, the modem processor may be independent of the processor 110, and disposed in a same device with the mobile communication module 150 or another function module.

The wireless communications module 160 may provide a wireless communication solution that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the mobile phone 100. The wireless communications module 160 may be one or more components integrated into at least one communications processing module. The wireless communications module 160 receives an electromagnetic wave through the antenna 2, performs frequency modulation and filtering processing on the electromagnetic wave signal, and sends a processed signal to the processor 110. The wireless communications module 160 may further receive a to-be-sent signal from the processor 110, perform frequency modulation and amplification on the signal, and convert a processed signal into an electromagnetic wave through the antenna 2 for radiation.

In some embodiments, in the mobile phone 100, the antenna 1 and the mobile communications module 150 are coupled, and the antenna 2 and the wireless communications module 160 are coupled, so that the mobile phone 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution. LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or satellite based augmentation systems (satellite based augmentation systems, SBAS).

The mobile phone 100 implements a display function by using the GPU, the display 194, the application processor, and the like. The GPU is a microprocessor for image processing, and is connected to the display 194 and the application processor. The GPU is configured to perform mathematical and geometric calculation, and render an image. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diodes, QLED), or the like In some embodiments, the mobile phone 100 may include one or N displays 194, where N is a positive integer greater than 1.

When a user interacts with an application in the foreground, the display 194 may display a user interface of the application.

After the mobile phone 100 detects an operation of opening a multitasking interface indicated by the user, the display 194 may further display the multitasking interface. The multitasking interface may include cards corresponding to a plurality of applications that are running on the mobile phone 100. The user may perform operations on the cards in the multitasking interface, such as moving, deleting, or adding a card.

The mobile phone 100 may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format such as an RGB format or a YUV format. In some embodiments, the mobile phone 100 may include one or N cameras 193, where N is a positive integer greater than 1.

The digital signal processor is configured to process a digital signal, and may process another digital signal in addition to the digital image signal. For example, when the mobile phone 100 selects a frequency, the digital signal processor is configured to perform Fourier transform on frequency energy, and the like.

The video codec is configured to compress or decompress a digital video. The mobile phone 100 may support one or more video codecs. In this way, the mobile phone 100 can play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a biological neural network structure, for example, by referring to a mode of transfer between human brain neurons, and may further continuously perform self-learning. Applications such as intelligent cognition of the mobile phone 100, such as image recognition, facial recognition, voice recognition, and text understanding, can be implemented by using the NPU.

The external memory interface 120 may be configured to connect to an external storage card such as a micro SD card, to extend a storage capability of the mobile phone 100. The external storage card communicates with the processor 110 through the external memory interface 120, to implement a data storage function. For example, files such as music and a video are stored in the external storage card.

The internal memory 121 may be configured to store computer executable program code, where the executable program code includes instructions. The processor 110 runs the instructions stored in the internal memory 121, to perform various function applications of the mobile phone 100 and data processing. The internal memory 121 may include a program storage area and a data storage area. The program storage area may store an operating system, an application program required by at least one function (for example, a voice playing function or an image playing function), and the like. The data storage area may store data (for example, audio data or an address book) created during use of the mobile phone 100, and the like. In addition, the internal memory 121 may include a high-speed random access memory, or may include a nonvolatile memory, for example, at least one magnetic disk storage device, a flash memory, or a universal flash storage (universal flash storage, UFS).

The mobile phone 100 may implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal output, and is further configured to convert an analog audio input into a digital audio signal. The audio module 170 may be further configured to code and decode an audio signal. In some embodiments, the audio module 170 may be disposed in the processor 110, or some functional modules of the audio module 170 are disposed in the processor 110.

The speaker 170A, also referred to as a "horn", is configured to convert an electrical audio signal into a sound signal. The mobile phone 100 may listen to music or answer a hands-free call by using the speaker 170A.

The receiver 170B, also referred to as an "earpiece", is configured to convert an electrical audio signal into a sound signal. When a call is answered or voice information is received by using the mobile phone 100, the receiver 170B may be put close to a human ear to listen to a voice.

The microphone 170C, also referred to as a "mic" or a "sound conducting device", is configured to convert a sound signal into an electrical signal. When making a call or sending a voice message, a user may make a sound near the microphone 170C through the mouth of the user to input a sound signal to the microphone 170C. At least one microphone 170C may be disposed in the mobile phone 100. In some other embodiments, two microphones 170C may be disposed in the mobile phone 100, to collect a sound signal and further implement a noise reduction function. In some other embodiments, three, four, or more microphones 170C may alternatively be disposed in the mobile phone 100, to collect a sound signal, reduce noise, further identify a sound source, implement a directional recording function, and the like.

The headset jack 170D is configured to connect to a wired headset. The headset jack 170D may be the USB interface 130 or a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are many types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The mobile phone 100 determines pressure intensity based on a capacitance change. When a touch operation is performed on the display 194, the mobile phone 100 detects intensity of the touch operation by using the pressure sensor 180A. The mobile phone 100 may also calculate a touch location based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on a Messages icon, an instruction for viewing an SMS message is executed. When a touch operation whose touch operation intensity is greater than or equal to the first pressure threshold is performed on a Messages icon, an instruction for creating an SMS message is executed.

The gyro sensor 180B may be configured to determine a moving posture of the mobile phone 100. In some embodiments, an angular velocity of the mobile phone 100 around three axes (namely, x, y, and z axes) may be determined by using the gyro sensor 180B. The gyroscope sensor 180B may be configured to implement image stabilization during photographing. For example, when a shutter is pressed, the gyro sensor 180B detects an angle at which the mobile phone 100 jitters, obtains, through calculation based on the angle, a distance for which a lens module needs to compensate, and allows a lens to cancel the jitter of the mobile phone 100 through reverse motion, to implement image stabilization. The gyro sensor 180B may be further used in a navigation scenario and a motion-sensing game scenario.

The barometric pressure sensor 180C is configured to measure barometric pressure. In some embodiments, the mobile phone 100 calculates an altitude by using the barometric pressure measured by the barometric pressure sensor 180C, to assist in positioning and navigation.

The magnetic sensor 180D includes a Hall sensor. The mobile phone 100 may detect opening and closing of a flip leather case by using the magnetic sensor 180D. In some embodiments, when the mobile phone 100 is a clamshell phone, the mobile phone 100 may detect opening/closing of a flip cover based on the magnetic sensor 180D. Further, a feature such as automatic unlocking upon opening of the clamshell is set based on a detected opening or closing state of the flip cover or a detected opening or closing state of the clamshell.

The acceleration sensor 180E may detect values of acceleration in various directions (usually on three axes) of the mobile phone 100. When the mobile phone 100 is still, a value and a direction of gravity may be detected. The acceleration sensor 180E may be further configured to identify a posture of the electronic device, and is applied to an application such as switching between a landscape mode and a portrait mode or a pedometer.

The distance sensor 180F is configured to measure a distance. The mobile phone 100 may measure a distance through infrared light or a laser. In some embodiments, in a photographing scenario, the mobile phone 100 may measure a distance by using the distance sensor 180F, to implement fast focusing.

The optical proximity sensor 180G may include, for example, a light emitting diode (LED) and an optical detector, for example, a photodiode. The light-emitting diode may be an infrared light-emitting diode. The mobile phone 100 emits infrared light through the light-emitting diode. The mobile phone 100 detects infrared reflected light from a nearby object by using the photodiode. When sufficient reflected light is detected, the mobile phone 100 may determine that there is an object near the mobile phone 100. When insufficient reflected light is detected, the mobile phone 100 may determine that there is no object near the mobile phone 100. The mobile phone 100 may detect, by using the optical proximity sensor 180G, that the user holds the mobile phone 100 close to an ear to make a call, so as to automatically turn off a screen for power saving. The optical proximity sensor 180G may also be used in a smart cover mode or a pocket mode to automatically perform screen unlocking or locking.

The ambient optical sensor 180L is configured to sense ambient light brightness. The mobile phone 100 may adaptively adjust brightness of the display 194 based on the sensed ambient light brightness. The ambient light sensor 180L may also be configured to automatically adjust a white balance during photographing. The ambient light sensor 180L may also cooperate with the optical proximity sensor 180G to detect whether the mobile phone 100 is in a pocket to prevent an accidental touch.

The fingerprint sensor 180H is configured to collect a fingerprint. The mobile phone 100 may use a feature of the collected fingerprint to implement fingerprint unlocking, application lock access, fingerprint-based photographing, fingerprint-based call answering, and the like.

The temperature sensor 180J is configured to detect a temperature. In some embodiments, the mobile phone 100 executes a temperature processing policy based on the temperature detected by the temperature sensor 180J. For example, when the temperature reported by the temperature sensor 180J exceeds a threshold, the mobile phone 100 lowers performance of a processor near the temperature sensor 180J, to reduce power consumption for thermal protection. In some other embodiments, when the temperature is lower than another threshold, the mobile phone 100 heats the battery 142 to prevent the mobile phone 100 from being shut down abnormally because of a low temperature. In some other embodiments, when the temperature is lower than still another threshold, the mobile phone 100 boosts an output voltage of the battery 142 to avoid abnormal shutdown caused by a low temperature.

The touch sensor 180K is alternatively referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor 180K. The touch sensor may transfer a detected touch operation to the application processor, to determine a type of a touch event. The display 194 may provide a visual output related to the touch operation. In some other embodiments, the touch sensor 180K may alternatively be disposed on a surface of the mobile phone 100 and is at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, to receive a blood pressure beating signal. In some embodiments, the bone conduction sensor 180M may also be disposed in the headset, to obtain a bone conduction headset. The audio module 170 may obtain a speech signal through parsing based on a vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The mobile phone 100 may receive a button input, and generate a button signal input related to a user setting and function control of the mobile phone 100.

The motor 191 may generate a vibration prompt. The motor 191 may be configured to provide an incoming call vibration prompt or a touch vibration feedback. For example, touch operations performed on different applications (for example, photographing and audio playing) may also correspond to different vibration feedback effects. The motor 191 may also correspond to different vibration feedback effects for touch operations performed on different areas of the display 194. Different application scenarios (for example, a time reminder scenario, an information receiving scenario, an alarm clock scenario, and a game scenario) may also correspond to different vibration feedback effects. A touch vibration feedback effect may alternatively be customized.

The indicator 192 may be an indicator light, which may be used to indicate a charging status and a power change, or may be used to indicate a message, a missed call, a notification, and the like.

The SIM card interface 195 is configured to connect to a SIM card. The SIM card may be inserted into the SIM card interface 195 or plugged from the SIM card interface 195, to implement contact with or separation from the mobile phone 100. The mobile phone 100 may support one or N SIM card interfaces, where N is a positive integer greater than 1. The SIM card interface 195 may support a nano-SIM card, a micro-SIM card, a SIM card, and the like. A plurality of cards may be simultaneously inserted into one SIM card interface 195. The plurality of cards may be of a same type or different types. The SIM card interface 195 may also be compatible with different types of SIM cards. The SIM card interface 195 may also be compatible with an external memory card. The mobile phone 100 interacts with a network by using the SIM card, to implement functions such as calling and data communication. In some embodiments, the mobile phone 100 uses an eSIM, namely, an embedded SIM card. The eSIM card may be embedded in the mobile phone 100, and cannot be separated from the mobile phone 100.

In some embodiments, a multitasking interface displayed on a touchscreen may include three cards that are horizontally arranged: a left card, a middle card, and a right card. The middle card is fully displayed, and only parts that are of the left card and the right card and that are close to the middle card are displayed. After detecting a swipe up operation performed by a user on a card, the touchscreen may report the operation to a processor. The processor determines, based on a swiping distance of a finger of the user, an angle by which the card is flipped to the back of the touchscreen (or into the touchscreen or to the inside of the touchscreen). As the distance by which the user swipes up on the card increases, the angle by which the card is flipped to the back of the touchscreen also increases. A multitasking manager draws the flipped card based on the angle, and content on the flipped card faces upward. The touchscreen displays the flipped card. After the flipping angle of the card is greater than or equal to a preset angle, the touchscreen stops displaying the card, and the card disappears. That is, the card is deleted. The processor closes a task corresponding to the deleted card, and releases resources such as memory occupied by the task corresponding to the deleted card.

The following describes a card processing method provided in the embodiments of this application by using an example in which the electronic device is the mobile phone 100 shown in FIG. 1, the task is an application, and each application corresponds to one card.

The mobile phone can simultaneously start and run a plurality of applications to provide different services or functions for the user. That the mobile phone simultaneously runs the plurality of applications means: The mobile phone has started the plurality of applications, does not close the plurality of applications, and does not delete resources such as memory occupied by the plurality of applications. The plurality of applications simultaneously occupy the resources such as memory in the background. The plurality of applications are not required to simultaneously interact with the user in the foreground. For example, the mobile phone successively starts Music, Gallery, and WeChat, and simultaneously runs Music, Gallery, and WeChat.

When the user uses an application, if the application is switched or a home screen is displayed for an operation, the electronic device does not close the application previously used by the user, but retains the previously used application, as a background application, in a multitasking queue.

When the mobile phone simultaneously runs a plurality of applications, the mobile phone may generate, based on the plurality of applications in the multitasking queue, a card corresponding to each application.

The mobile phone displays a multitasking interface after detecting an operation of opening a multitasking interface indicated by the user. The multitasking interface includes cards corresponding to a plurality of applications that are running on the mobile phone.

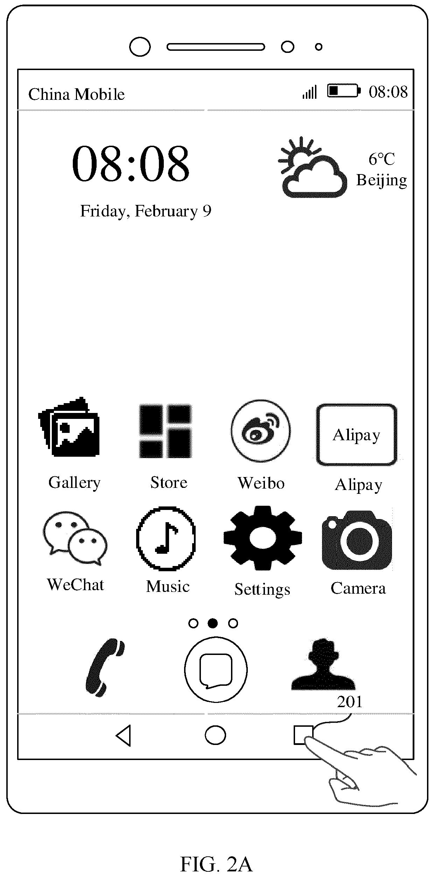

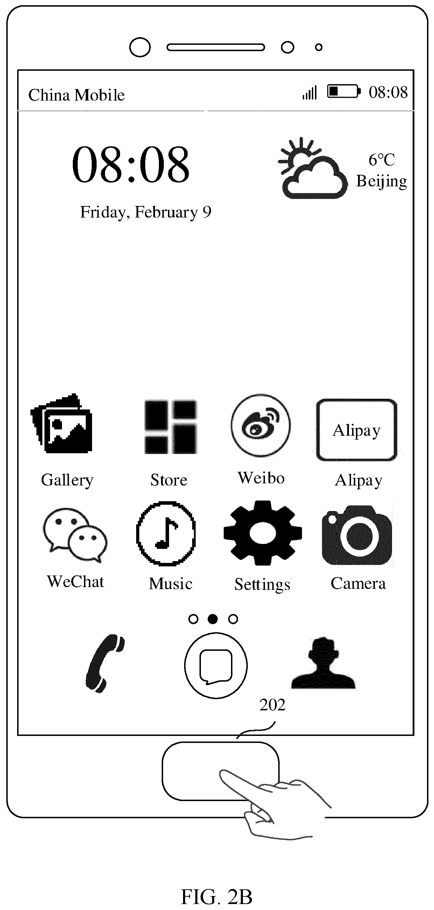

There may be a plurality of manners in which the user indicates to open the multitasking interface. For example, the operation of opening the multitasking interface indicated by the user may be an operation that the user taps a historical task virtual button 201 shown in FIG. 2A. For another example, the operation of opening the multitasking interface indicated by the user may be an operation that the user double-taps a home button (or referred to as a home button) 202 shown in FIG. 2B.

A plurality of cards in the multitasking interface are horizontally arranged in parallel according to a preset sequence policy. For example, in a sequence policy, the mobile phone arranges, according to a time sequence for running different applications, cards corresponding to the different applications.

Generally, an operating system of the mobile phone provides a process for recording usage of applications installed on the mobile phone. After the mobile phone is powered on, the process monitors running statuses of the applications on the mobile phone in real time, and records and collects statistics on usage data related to the user of the mobile phone. For example, information such as a name of an application in the mobile phone, a quantity of times of starting the application, and time of starting the application is recorded. The usage data may be stored in a specific storage area of the mobile phone. The mobile phone may read the usage data from the storage area, and arrange, according to start time of different applications in the usage data, a plurality of cards corresponding to the different applications.

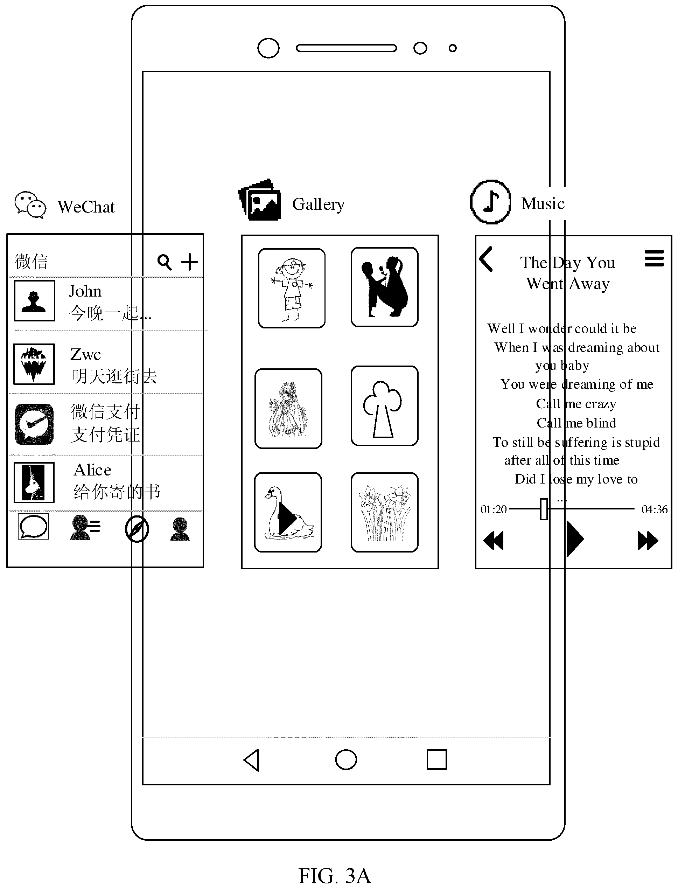

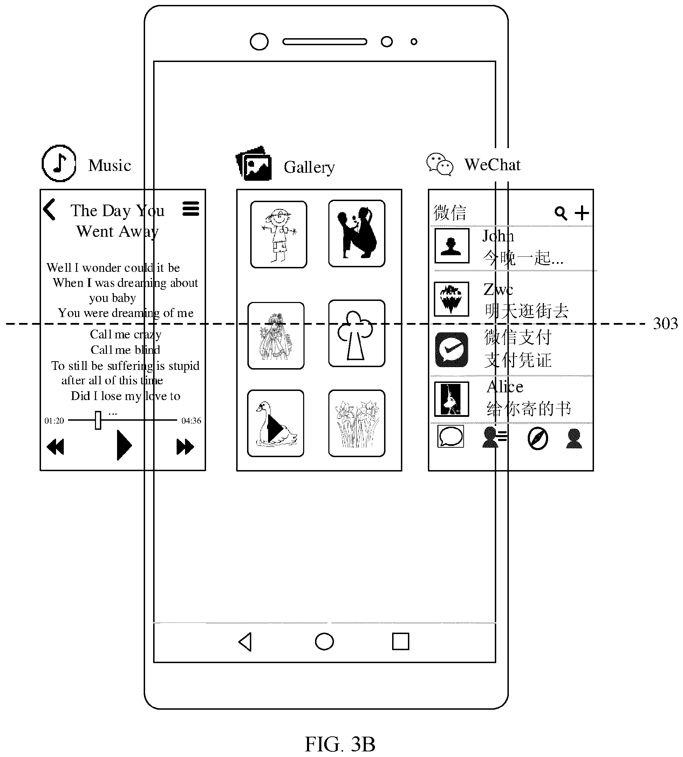

For example, as shown in FIG. 3A, a card corresponding to a last run application (for example, WeChat) is arranged on the leftmost side, and cards corresponding to previously run applications (for example, Gallery and Music) are successively arranged on the right. For another example, as shown in FIG. 3B, a last run card corresponding to an application (for example, WeChat) is arranged on the rightmost side, and cards corresponding to previously run applications (for example, Gallery and Music) are successively arranged on the left.

It should be noted that the accompanying drawings are merely example descriptions. The multitasking interfaces shown in the accompanying drawings are interfaces displayed on a touchscreen inside a frame of the mobile phone. A part of a card inside the frame of the mobile phone can be displayed on the touchscreen of the mobile phone, and a part of a card outside the frame of the mobile phone cannot be displayed on the touchscreen of the mobile phone.

In some embodiments, an icon corresponding to a card, for example, an icon of an application corresponding to the card, may be further displayed in the multitasking interface, to help the user quickly identify the application corresponding to the card.

In the following embodiments of this application, an example in which a card corresponding to a last run application is arranged on the rightmost side in the multitasking interface, and cards corresponding to previously run applications are successively arranged on the left.

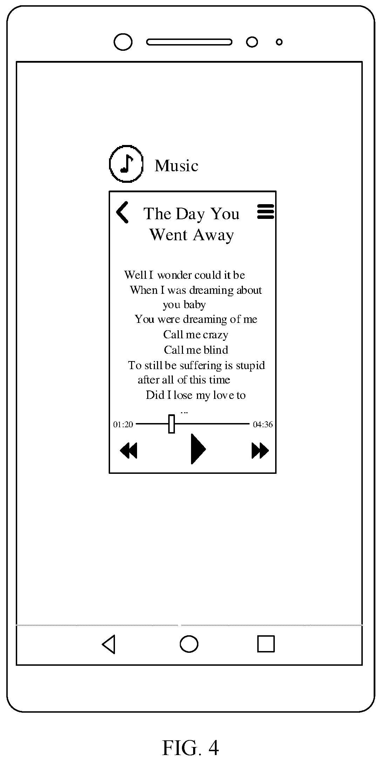

In some embodiments, if the mobile phone is currently running one application, after a multitasking interface is opened, the multitasking interface may include one card corresponding to the application. The card is located in the middle of the touchscreen. The middle of the touchscreen is most easily seen by the user, and may be referred to as a focal position. The card is located in the focal position, and the card may be referred to as a focal card. For example, if the application is Music, FIG. 4 shows a schematic diagram of a multitasking interface.

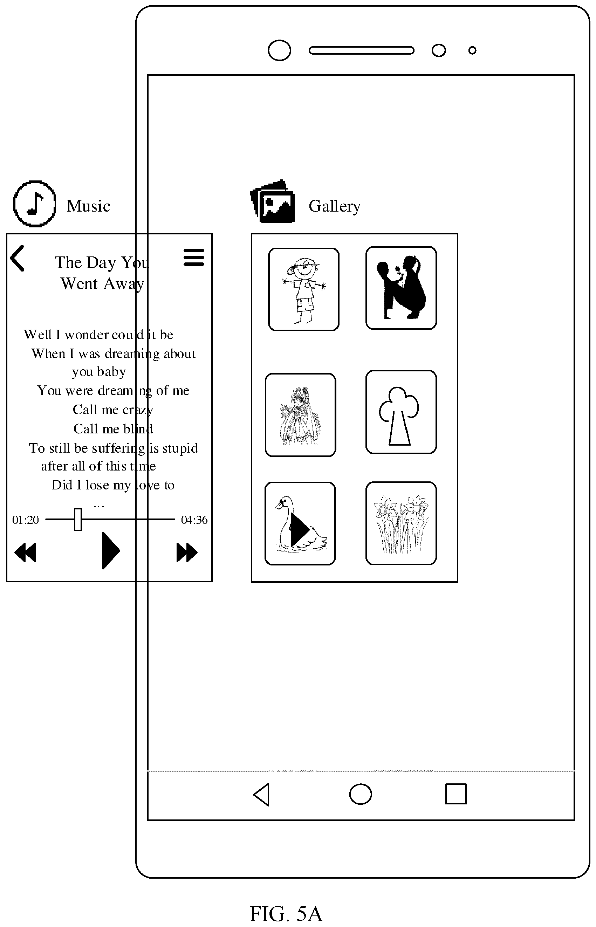

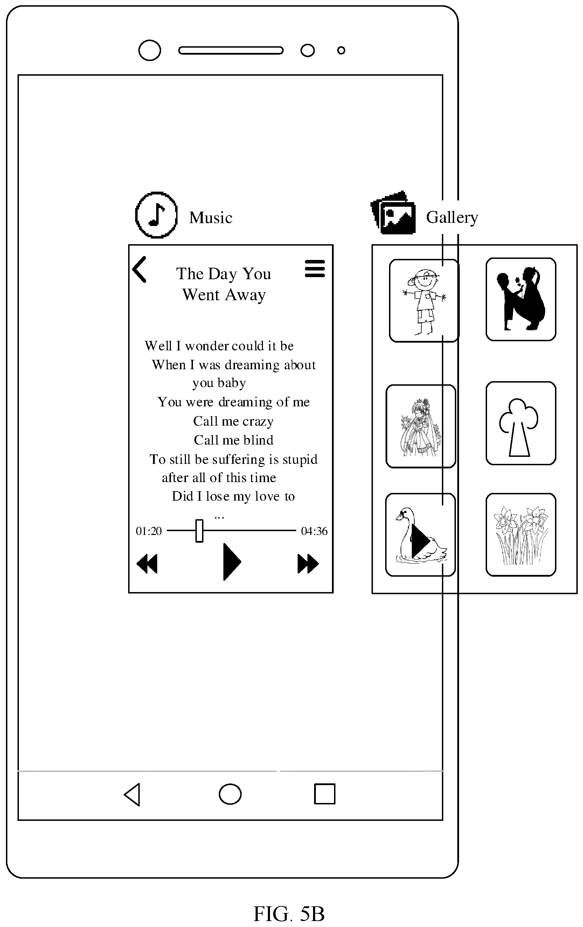

In some other embodiments, if the mobile phone is currently running two applications, after a multitasking interface is opened, the multitasking interface may include two cards corresponding to the two applications. For example, the mobile phone first runs Music, and then Gallery. In a case, the mobile phone enters a multitasking interface from a home screen (for example, an operation of tapping the button 201 by the user is detected when the home screen is displayed). For the multitasking interface in this case, refer to FIG. 5A. A card corresponding to Gallery is located in a middle focal position, so that the user can conveniently view and tap the card corresponding to Gallery that is last run. A card corresponding to Music is located on the left of the card corresponding to Gallery. In another case, the mobile phone enters a multitasking interface from Gallery (for example, an operation of tapping the button 201 by the user is detected when an interface of Gallery is displayed), and in most cases, the user wants to open another application by using the multitasking interface. Therefore, for the multitasking interface in this case, refer to FIG. 5B. A previous card of a card corresponding to Gallery may be located in a middle focal position, so that the user can conveniently view and tap the card. The card corresponding to Gallery may be located on the right of the card corresponding to Music.

As shown in FIG. 5A or FIG. 5B, in a multitasking interface, a card in the middle may be fully displayed, and a card on the left or right may only be partially displayed.

In some other embodiments, if the mobile phone is currently running three or more applications, after a multitasking interface is opened, the multitasking interface may include two cards corresponding to two or three recently run applications. For example, the mobile phone successively runs Music (namely, a first application), Gallery (namely, a second application), and WeChat (namely, a third application).

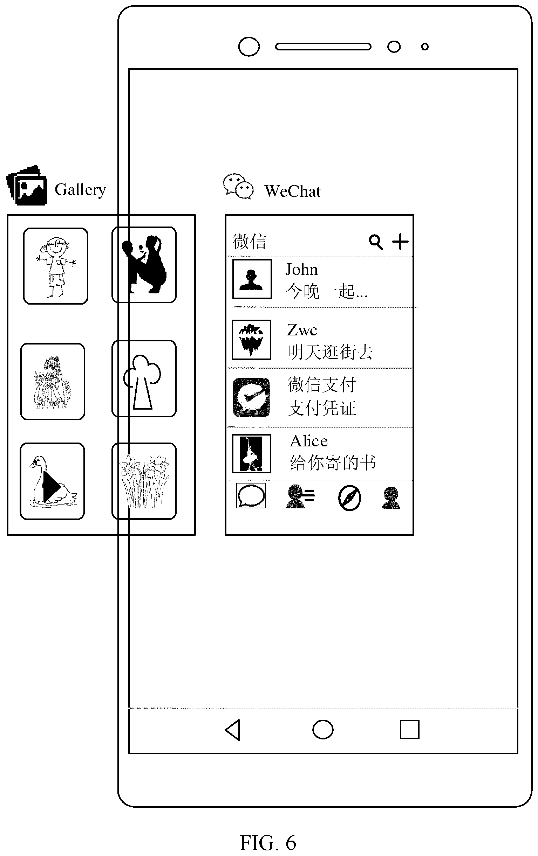

In a case, the mobile phone enters a multitasking interface from a home screen (for example, an operation of tapping the button 201 by the user is detected when the home screen is displayed). For the multitasking interface in this case, refer to FIG. 6. A card corresponding to WeChat is located in a middle focal position, so that the user can conveniently view and tap a card corresponding to Gallery that is last run. A card corresponding to Gallery is located on the left of the card corresponding to WeChat, and a card corresponding to Music is not displayed on the mobile phone.

In another case, the mobile phone enters a multitasking interface from WeChat (for example, an operation of tapping the button 201 by the user is detected when an interface of WeChat is displayed), and in most cases, the user wants to open another application by using the multitasking interface. Therefore, for the multitasking interface in this case, refer to FIG. 3B. A previous card of a card corresponding to WeChat may be located in a middle focal position, so that the user can conveniently view and tap the card. The card corresponding to WeChat may be located on the right of the card corresponding to Gallery. A card corresponding to Music may be located on the left of the card corresponding to Gallery.

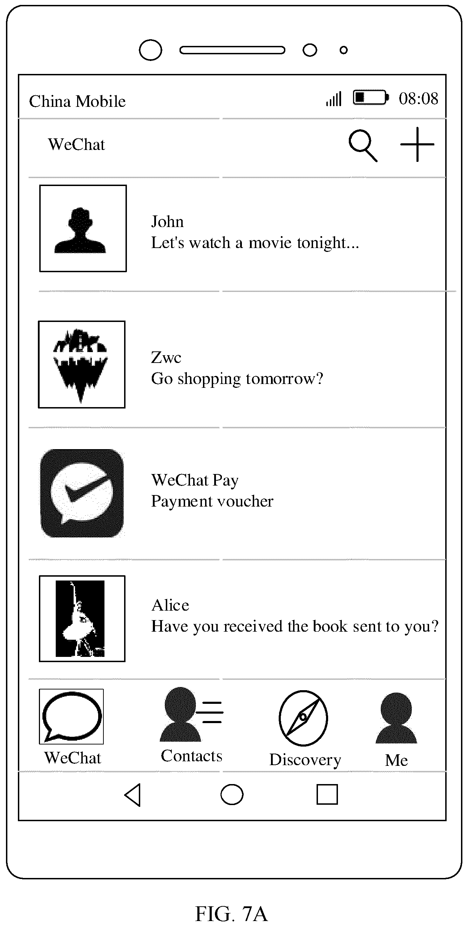

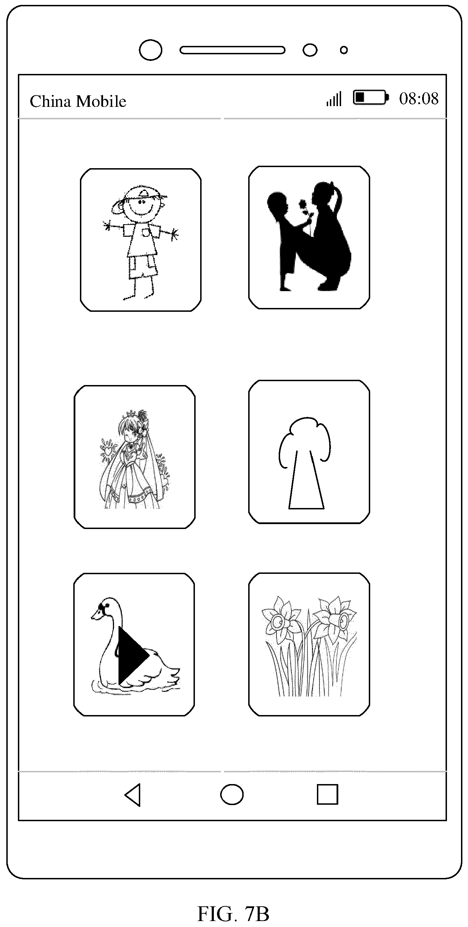

When the mobile phone detects that the user taps a card, the mobile phone opens an application corresponding to the card, and displays a user interface of the application in full screen. For example, when the mobile phone detects that the user taps the card corresponding to WeChat shown in FIG. 6, the mobile phone opens the WeChat application, and displays a WeChat user interface shown in FIG. 7A in full screen. For example, when the mobile phone detects that the user taps the card corresponding to Gallery shown in FIG. 6, the mobile phone opens the Gallery application, and displays a Gallery user interface shown in FIG. 7B in full screen.

In the following embodiments of this application, an example in which after the multitasking interface is opened, the multitasking interface includes three images that are horizontally arranged on the left, the middle, and the right is used for description. A card in the middle may be fully displayed, and cards on the left or right may be partially displayed. For example, a multitasking interface including three cards may be shown in FIG. 3B.

The following separately describes processing of card arrangement, swiping, deletion, and addition.

### Card arrangement:

In some embodiments, three cards displayed in a multitasking interface have a same size, and are arranged in parallel along a first direction. The first direction is horizontal or substantially horizontal on the touchscreen. For example, the first direction is parallel to a direction of a top edge (or a bottom edge) of the mobile phone. In other words, the three cards displayed in the multitasking interface are arranged horizontally along a linear axis parallel to the top edge of the mobile phone. Edges of the three cards each are parallel to edges of the electronic device. A component such as an earpiece or a camera is usually disposed on the top of the mobile phone, and a side opposite to the top is the bottom of the mobile phone. As shown in FIG. 3B, a first card, a second card, and a third card are arranged laterally along a linear axis 303. The first card is a card corresponding to Music, the second card is a card corresponding to Gallery, and the third card is a card corresponding to WeChat. The second card is located between the first card and the third card. For example, the second card may be located in the middle of the touchscreen, the first card is located on the left of the second card, and the second card is located on the right on the touchscreen. In addition, the card corresponding to Gallery is fully displayed, only a right part of the card corresponding to Music is displayed, and only a left part of the card corresponding to WeChat is displayed.

In some other embodiments, the three cards displayed in the multitasking interface are in a same size, the second card in the middle is arranged in parallel with a frame of the touchscreen, and the first card and the third card located on the left and right are rotated relative to the second card. Therefore, the multitasking interface and a card arrangement manner in the multitasking interface are relatively novel, and visual experience of the user is improved.

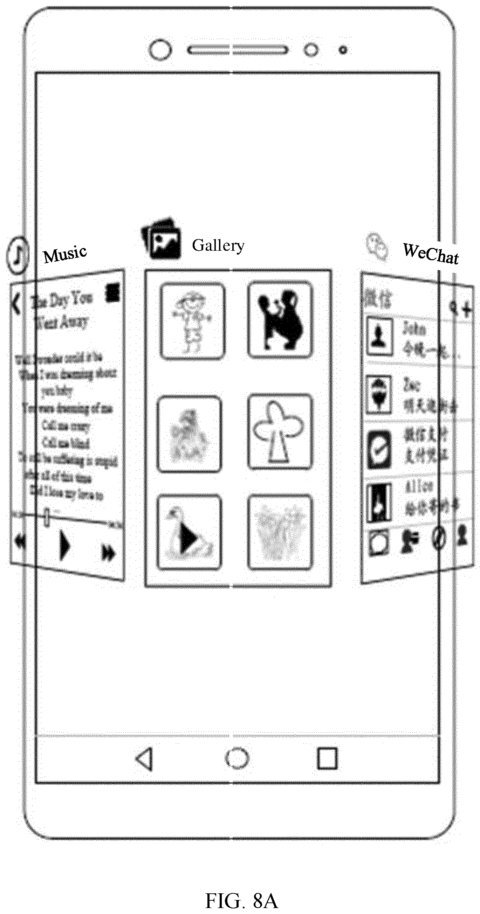

For example, as shown in FIG. 8A, the first card on the left is rotated to the back of the touchscreen by a preset angle 1 by using a straight line parallel to a side edge of the mobile phone as an axis, and the third card on the right is rotated to the back of the touchscreen by a preset angle 2 by using the straight line parallel to the side edge of the mobile phone as an axis. The side edge of the mobile phone is used to connect the top and the bottom of the mobile phone, and the side edge of the mobile phone may be perpendicular to the linear axis, the first direction, the top edge of the mobile phone, and the bottom edge of the mobile phone.

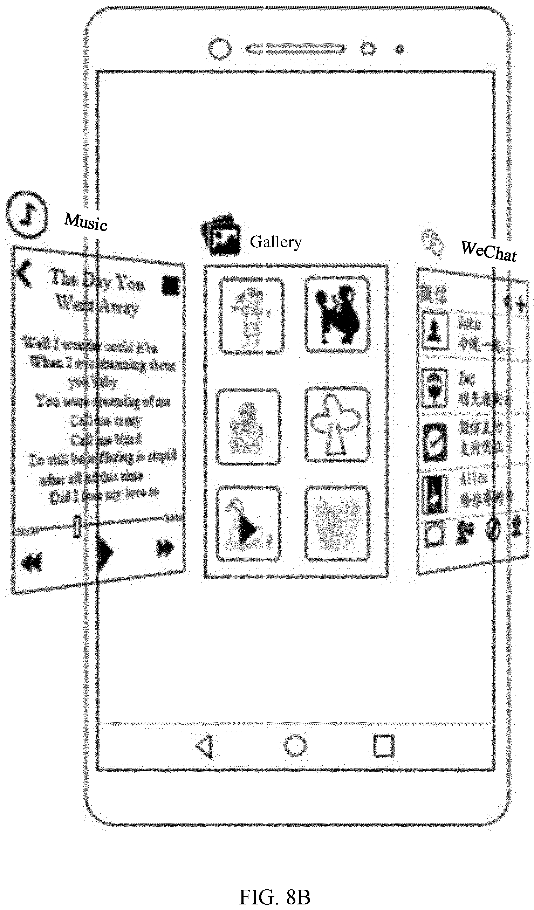

For another example, as shown in FIG. 8B, the first card on the left is rotated to the front of the touchscreen (or referred to as the outside of the touchscreen) by a preset angle 1 by using a straight line parallel to a side edge of the mobile phone as an axis, and the third card on the right is rotated to the back of the touchscreen by a preset angle 2 by using the straight line parallel to the side edge of the mobile phone as an axis.

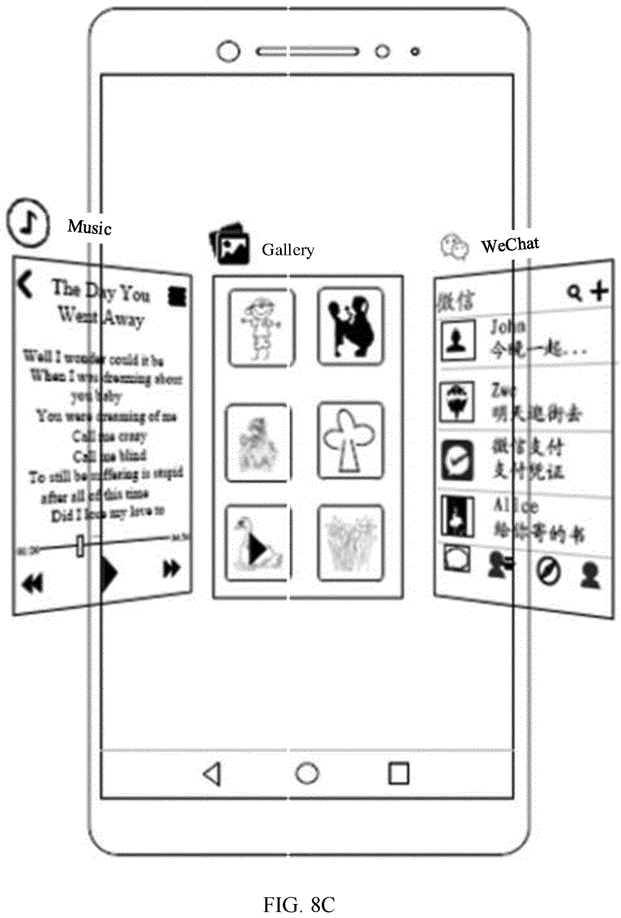

For another example, as shown in FIG. 8C, the first card on the left is rotated to the front of the touchscreen by a preset angle 1 by using a straight line parallel to a side edge of the mobile phone as an axis, and the third card on the right is rotated to the front of the touchscreen by a preset angle 2 by using the straight line parallel to the side edge of the mobile phone as an axis.

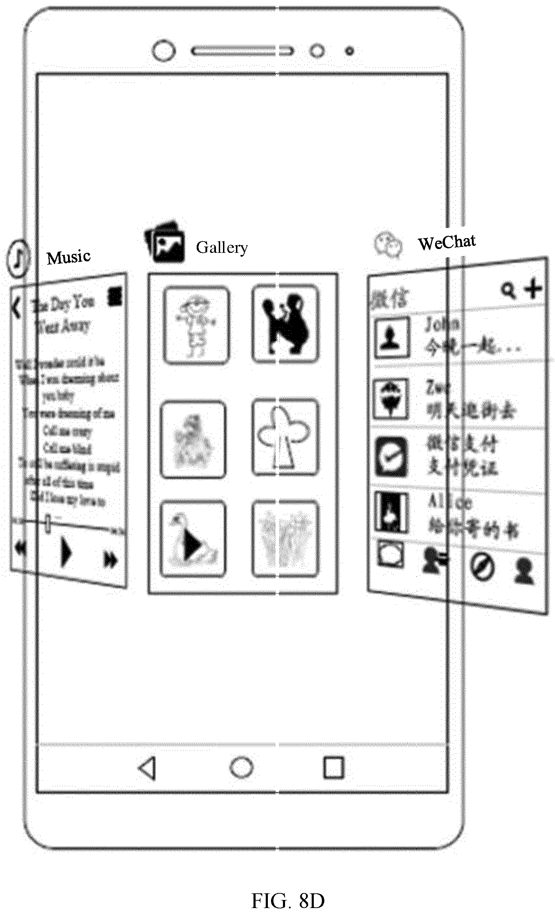

For another example, as shown in FIG. 8D, the first card on the left is rotated to the back of the touchscreen by a preset angle 1 by using a straight line parallel to a side edge of the mobile phone as an axis, and the third card on the right is rotated to the front of the touchscreen by a preset angle 2 by using the straight line parallel to the side edge of the mobile phone as an axis.

Compared with the multitasking interface shown in FIG. 3B, as shown in FIG. 8A to FIG. 8D, after the first card and the third card are rotated to the front or the back of the touchscreen, the touchscreen may display more content on the first card and the third card. In this way, the user can conveniently learn of more information about applications corresponding to the first card and the third card.

In some embodiments, the first card is moved by a preset angle 3 relative to the second card, and the third card is moved by a preset angle 4 relative to the second card.

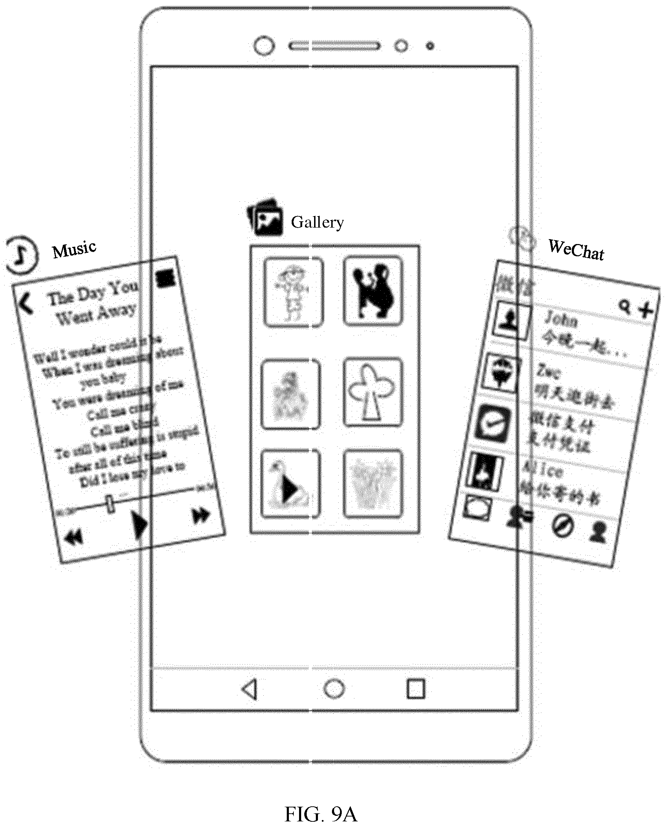

For example, as shown in FIG. 9A, the first card on the left is moved counterclockwise by the preset angle 3 by using a straight line perpendicular to the touchscreen as an axis, and the third card on the right is moved clockwise by the preset angle 4 by using the straight line perpendicular to the touchscreen as an axis.

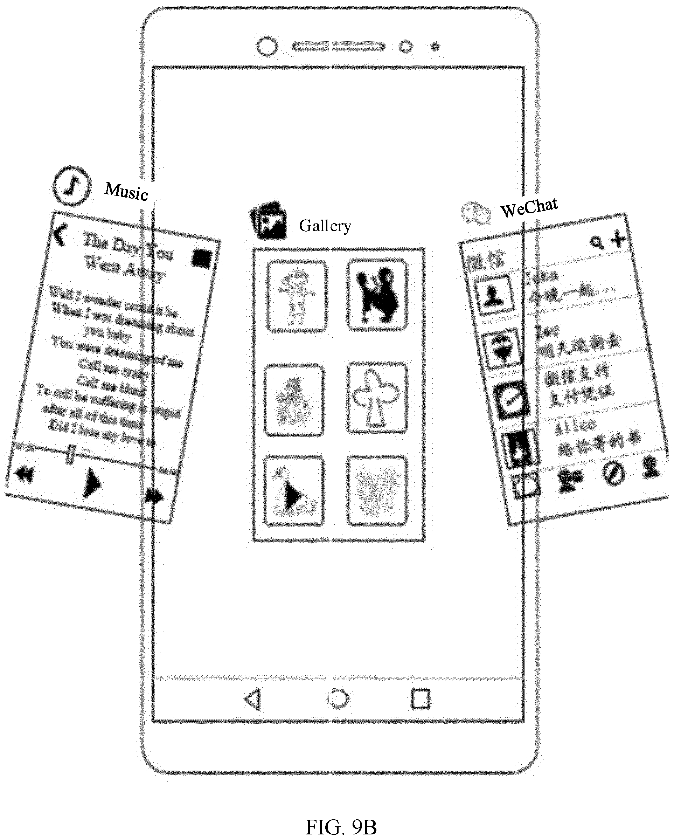

For another example, as shown in FIG. 9B, the first card on the left is moved clockwise by the preset angle 3 by using a straight line perpendicular to the touchscreen as an axis, and the third card on the right is moved counterclockwise by the preset angle 4 by using the straight line perpendicular to the touchscreen as an axis.

An angle by which the first card is turned may be the same as or different from an angle by which the third card is turned. The turning includes the rotating or the moving. When the angle by which the first card is turned may be the same as or different from the angle by which the third card is turned, the multitasking interface may be more attractive. In addition, for aesthetic appearance, when the angle by which the first card is turned is different from the angle by which the third card is turned, a difference between the two angles may be relatively small. For example, the difference may be less than or equal to a preset value (for example, 5°).

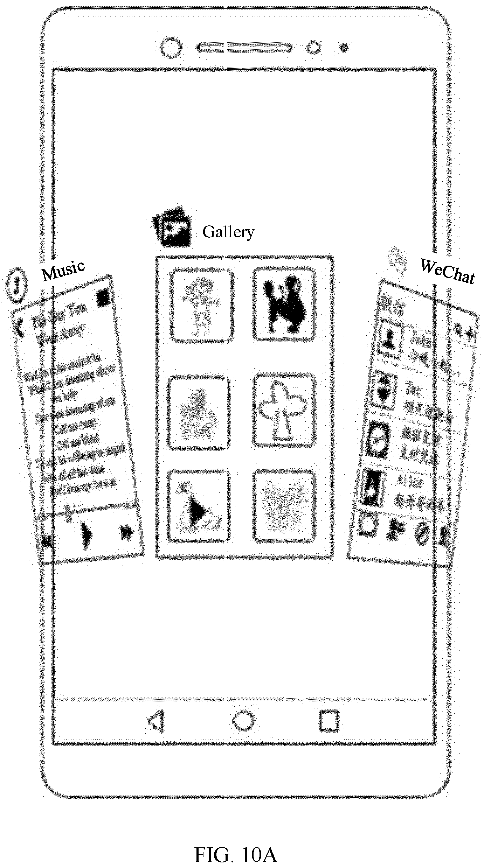

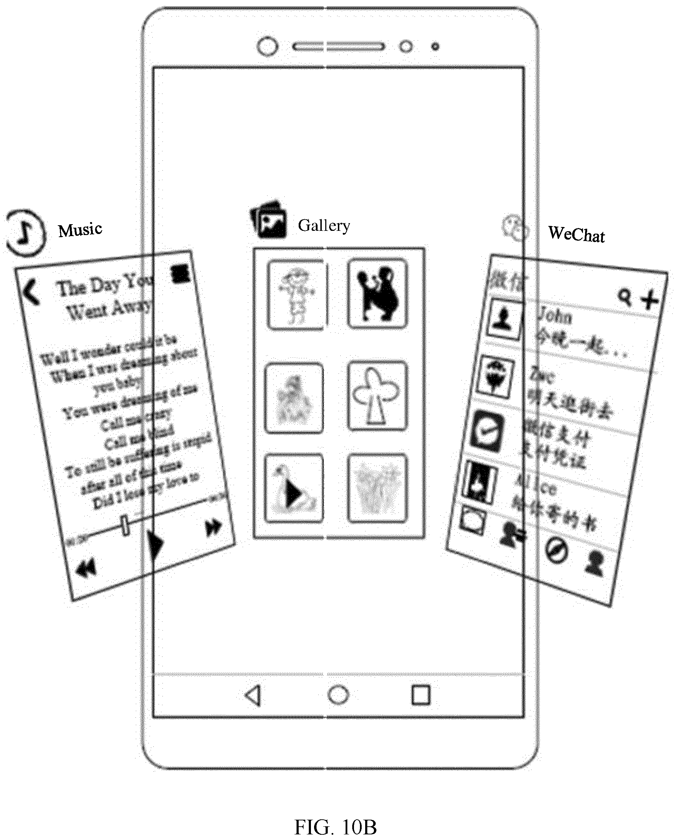

In some other embodiments, the first card and the third card may be rotated to the front or back of the touchscreen, and also moved counterclockwise or clockwise. For example, as shown in FIG. 10A, the first card on the left may be rotated to the back of the touchscreen and moved counterclockwise, and the third card on the right may be rotated to the back of the touchscreen and moved clockwise. For example, as shown in FIG. 10B, the first card on the left may be rotated to the front of the touchscreen and moved counterclockwise, and the third card on the right may be rotated to the front of the touchscreen and moved clockwise.

### Card swiping:

After detecting an operation of swiping left or right by the user in the first direction (or referred to as a direction along the linear axis) in the multitasking interface, the mobile phone may display card swiping. For example, when detecting that the user swipes right in the multitasking interface, the mobile phone successively moves cards in the multitasking interface to the right. After the moving, the third card located on the right before the moving may disappear. After the moving, the second card located on the left before the moving may be located in a position in which the third card is located before the moving, and is turned to a state of the third card that exists before the moving. After the moving, the first card located on the left before the moving may be located in a middle focal position in which the second card is located before the moving, and is turned to a state of the second card that exists before the moving. If the mobile phone does not run another application or closes another application before the mobile phone runs an application corresponding to the first card, no other card is displayed on the left of the first card. That is, after the cards are moved right, no card is displayed on the left in the multitasking interface, the first card is displayed in the middle, and the second card is displayed on the right.

If the mobile phone runs a fourth application and does not close the fourth application before the mobile phone runs an application corresponding to the first card, a fourth card may be displayed on the left of the first card. The fourth card may occupy a position in which the first card is located before the moving, and is turned to a state of the first card that exists before the moving. That is, after the cards are moved right, the fourth card is displayed on the left in the multitasking interface, the first card is displayed in the middle, and the second card is displayed on the right.

For another example, when detecting that the user swipes left along the linear axis in the multitasking interface, the mobile phone successively moves cards in the multitasking interface to the left. After the moving, the first card located on the left before the moving may disappear. After the moving, the second card located in the middle before the moving may occupy a position in which the first card is located before the moving, and is turned to a state of the first card that exists before the moving. After the moving, the third card located on the right before the moving may be located in a middle focal position in which the second card is located before the moving, and is turned to a state of the second card that exists before the moving. If the mobile phone does not run another application or closes another application after the mobile phone runs an application corresponding to the first card, no other card is displayed on the right of the first card. That is, after the cards are moved left, in the multitasking interface, the second card is displayed on the left, the third card is displayed in the middle, and no card is displayed on the right.

If the mobile phone runs a fifth application after the mobile phone runs an application corresponding to the first card, a fifth card may be displayed on the right of the first card. The fifth card may occupy a position in which the third card is located before the moving, and is turned to a state of the third card that exists before the moving.

It can be learned from the foregoing that a card is also turned when being moved. In addition, an angle by which the card is turned increases as a distance by which the user swipes on the touchscreen increases.

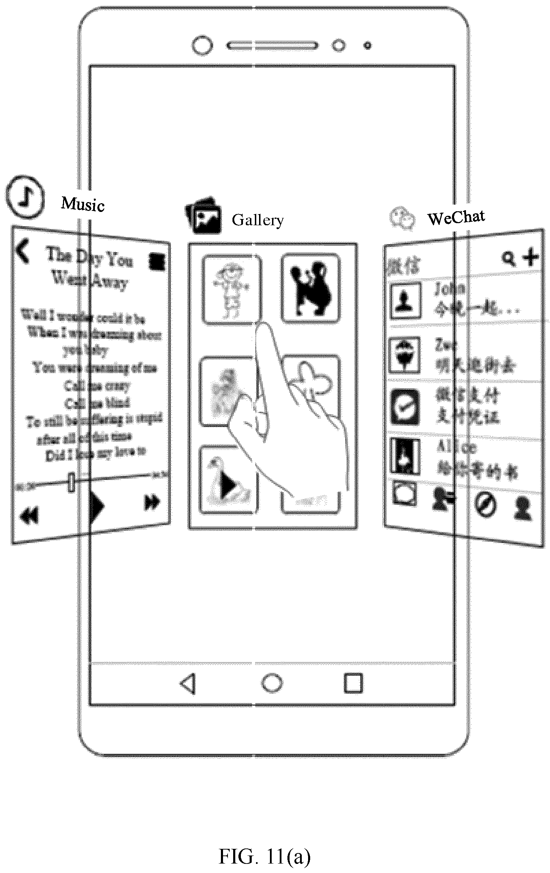

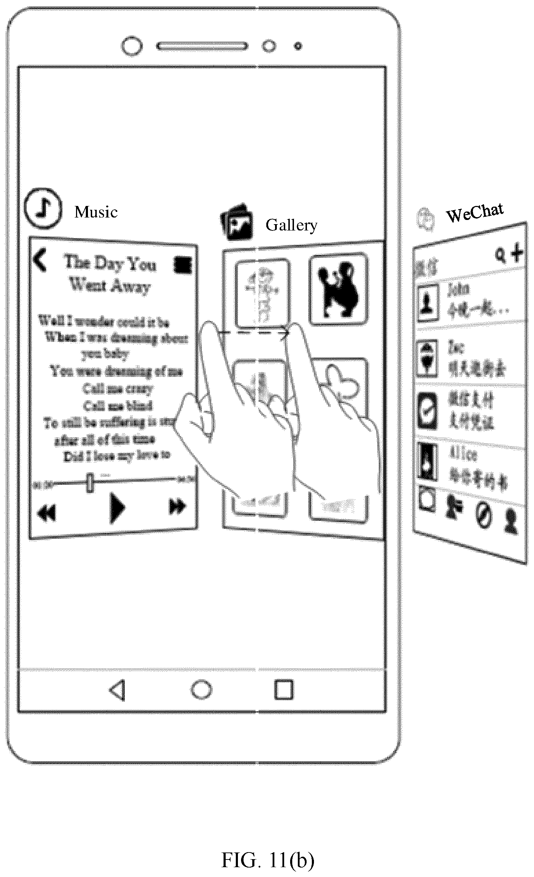

For example, for the case shown in FIG. 8C, when the mobile phone detects that the user swipes right along the linear axis in the multitasking interface, for schematic diagrams of a swiping process of the user's hand and a process in which the cards are moved and turned, refer to FIG. 11(a) and FIG. 11(b).

### Deletion of a single card:

After detecting a swipe up operation performed by the user on a target card on the touchscreen, the mobile phone may delete the target card. In other words, the mobile phone may delete the target card after detecting a swipe up operation performed by the user on the target card in a multitasking interface along a direction perpendicular to the top edge of the mobile phone (or in a direction perpendicular to the linear axis). That is, the mobile phone may stop displaying the target card, and the target card disappears from the touchscreen. An application corresponding to the target card is closed, and resources such as memory occupied by the application corresponding to the target card are released (or deleted) in the background.

In a case, the target card is any card in the multitasking interface, for example, may be the first card, the second card, or the third card.

In a technical solution, after the mobile phone detects a swipe up operation performed by the user on the target card in the multitasking interface along the direction perpendicular to the linear axis, the target card disappears after the target card is flipped to the back of the touchscreen by a preset angle 5 by using a straight line parallel to the linear axis as an axis. That is, the mobile phone stops displaying the target card and deletes the target card. In addition, content of the card may face upward during the flipping.

In this way, a novel and unique dynamic visual effect can be provided for the user. That is, the target card flies into (to the inside of or to the back of) the touchscreen and disappears, or the target card disappears after being pushed over by the user and flying into the touchscreen.

In a process in which the target card is flipped to the back of the touchscreen, a visual feeling presented to the user is that the target card is scaled down. That is, the user feels that the target card flies into the touchscreen, flies farther and farther, and finally disappears.

When the target card is deleted, a card adjacent to the target card is moved along the first direction, to fill in an area that is left after the target card is deleted. For example, a card that is left adjacent to the target card may be filled in the area that is left after the target card is deleted, and the card is turned to a state that exists before the target card is deleted. For another example, a card that is right adjacent to the target card may be filled in the area that is left after the target card is deleted, and the card is turned to a state that exists before the target card is deleted.

It should be noted that the process in which the card is filled in the area that is left after the target card is deleted may be synchronous with a process in which the target card is flipped and disappears. That is, in a process of slowly flipping the target card to the back of the touchscreen, the adjacent card is slowly moved to the position in which the target card is located before the target card is deleted, and is slowly turned to the state that exists before the target card is deleted.

In some embodiments, an angle by which the target card is flipped to the back of the touchscreen may be directly proportional to a distance by which the user swipes up. As the distance by which the user swipes up gradually increases, the angle by which the card is flipped to the back of the touchscreen also gradually increases. For example, in a case shown in FIG. 3B, for a schematic diagram of a process in which after detecting an operation of deleting the second card indicated by the user, the mobile phone deletes the second card, and the first card on the left is filled in an area that is left after the second card is deleted, refer to FIG. 12A-1 to FIG. 12A-4.

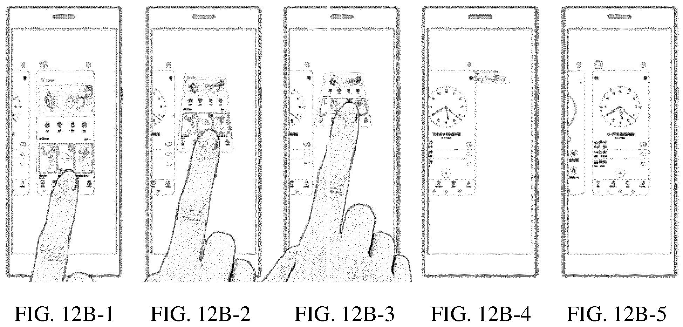

For another example, if the mobile phone successively opens a theme application, a clock application, and a manager application, after entering a multitasking interface from the theme application, the mobile phone may display the multitasking interface shown in FIG. 12B-1. For a schematic diagram of a process in which after detecting that the user indicates to delete a card corresponding to the theme application, the mobile phone deletes the card corresponding to the theme application, and a card on the left is filled in an area that is left after the card corresponding to the theme application is deleted, refer to FIG. 12B-1 to FIG. 12B-5.

In some other embodiments, an angle by which the target card is flipped to the back of the touchscreen is directly proportional to a speed at which the user swipes up. A faster speed at which the user swipes up indicates a larger angle by which the target card is flipped to the back of the touchscreen, and a faster flipping speed.

In some embodiments, when the angle by which the target card is flipped to the back of the touchscreen is greater than or equal to the preset angle 5, regardless of whether the user's hand leaves the touchscreen, the mobile phone stops displaying the target card, and the target card disappears. That is, the mobile phone deletes the target card.

In some other embodiments, when the angle by which the target card is flipped to the back of the touchscreen is greater than or equal to the preset angle 5, if the user's hand leaves the touchscreen, the mobile phone stops displaying the target card, the target card disappears, and the mobile phone deletes the target card. If the user's hand does not leave the touchscreen, the target card does not disappear and remains in a current flipping state, and the mobile phone does not delete the target card. When the user's hand does not leave the touchscreen, if the mobile phone detects a swipe down operation performed by the user, the target card that has been flipped to the back of the touchscreen is flipped back until the target card is in a state of the target card that exists before the user swipes up, that is, until the target card is restored to a state of the target card that exists before the target card is flipped to the back of the touchscreen. For example, in a case shown in FIG. 8C, if the target card is the second card, for a schematic diagram of card processing corresponding to a scenario in which the user's hand swipes up on the second card, does not leave the touchscreen, and then swipes down, refer to FIG. 13(a) to FIG. 13(f). Then, after the mobile phone detects that the user's hand leaves the touchscreen, in an implementation, regardless of whether the angle by which the target card is currently flipped to the back of the touchscreen is less than the preset angle 5, the target card disappears, and the mobile phone deletes the target card. In a solution of another embodiment, if an angle by which the target card is currently flipped to the back of the touchscreen is less than the preset angle 5, the target card does not disappear, and is restored to a state of the target card that exists before the user swipes up, and the mobile phone does not delete the target card. If the angle by which the target card is currently flipped to the back of the touchscreen is greater than or equal to the preset angle 5, the target card disappears. In this way, if the user finds in time that an operation of deleting the target card is mistakenly triggered, the user's hand may not leave the touchscreen or swipe down, so that the target card is not deleted.

In some other embodiments, when the angle by which the target card is flipped to the back of the touchscreen is greater than or equal to the preset angle 5, if the user's hand leaves the touchscreen, the mobile phone stops displaying the target card, the target card disappears, and the mobile phone deletes the target card. If the user's hand does not leave the touchscreen, the target card does not disappear and remains in a current flipping state, and the mobile phone does not delete the target card. When the user's hand does not leave the touchscreen, if the mobile phone detects that the user continues to swipe up, the target card does not disappear and remains in a current flipping state, and the mobile phone does not delete the target card. After the mobile phone detects that the user's hand leaves the touchscreen, the target card disappears, and the mobile phone deletes the target card.

In some other embodiments, when the angle by which the target card is flipped to the back of the touchscreen is less than the preset angle 5, and the mobile phone detects that the user's hand leaves the touchscreen, the target card is flipped by a specific angle and does not disappear, and the mobile phone does not delete the target card. When detecting that the user's hand swipes up, does not leave the touchscreen, and then swipes down, the target card that has been flipped to the back of the touchscreen is flipped back, that is, the target card is flipped to the front of the touchscreen, until the target card is restored to a state of the target card that exists before the user swipes up. That is, when the user's hand does not leave the touchscreen, the target card may be flipped to the back of the touchscreen as the user swipes up, and may be flipped to the front of the touchscreen as the user swipes down. Then, after the mobile phone detects that the user's hand leaves the touchscreen, if the angle by which the target card is flipped to the back of the touchscreen is less than the preset angle 5, the target card does not disappear and is restored to the state of the target card that exists before the user swipes up, and the mobile phone does not delete the target card.

In some embodiments, as the user's hand swipes up, the target card may be increasingly blurred in a process in which the target card is flipped to the back of the touchscreen. As the user's hand swipes down, the target card may be increasingly clear in a process in which the target card is flipped back.

In another technical solution, after the mobile phone detects a swipe up operation performed by the user on the target card in the multitasking interface along the direction perpendicular to the linear axis, the target card is flipped to the back of the touchscreen by a preset angle, is moved up by a preset distance, and then disappears. The target card is deleted. The target card may be first flipped and then moved, or may be moved and then flipped, or may be moved while being flipped. This is not limited in this embodiment of this application. This can provide the user with dynamic visual experience that the target card disappears after flying up and flying into the touchscreen.

In another technical solution, after the mobile phone detects a swipe up operation performed by the user on the target card in the multitasking interface along the direction perpendicular to the linear axis, the target card is flipped to the back of the touchscreen by a preset angle, is scaled down to a proportion, and then disappears. The target card is deleted. In this way, an effect of scaling down the target card is more obvious, and the user also feels, more obviously, that the target card flies increasingly farther in the flipping process. The target card may be first flipped and then scaled down, or may be scaled down while being flipped. This is not limited in this embodiment of this application.

In another technical solution, after the mobile phone detects a swipe up operation performed by the user on the target card in the multitasking interface along the direction perpendicular to the linear axis, the target card is moved up by a preset distance, is flipped to the back of the touchscreen by a preset angle, is scaled down to a proportion, and then disappears. The target card is deleted. This can provide the user with dynamic visual experience that the target card flies up, flies into the touchscreen, flies increasingly farther and smaller, and finally disappears.

In another case, the target card is a card in the middle in the multitasking interface, or is referred to as a middle card. After detecting a swipe up operation performed by the user on the middle card in the multitasking interface along the direction perpendicular to the linear axis, the mobile phone may delete the middle card. After detecting a swipe up operation performed by the user on a card on the left or right in the multitasking interface along the direction perpendicular to the linear axis, the mobile phone does not delete the card on the left or right.

In a technical solution, after the mobile phone detects the swipe up operation performed by the user on the card on the left or right in the multitasking interface along the direction perpendicular to the linear axis, the card on the left/right does not disappear, and the mobile phone does not delete the card on the left/right, and does not close an application corresponding to the card on the left/right in the background.

In another technical solution, after detecting the swipe up operation performed by the user on the card on the left or right in the multitasking interface along the direction perpendicular to the linear axis, the mobile phone prompts the user that the card cannot be deleted, or prompts the user to move the card. In addition, the card on the left/right does not disappear, and the mobile phone does not delete the card on the left/right. For example, the mobile phone may vibrate, beep, display a message, or play voice to prompt the user that the card on the left/right cannot be deleted.

In another technical solution, after the mobile phone detects the swipe up operation (namely, a deletion operation indicated by the user) performed by the user on a card on the left in the multitasking interface along the direction perpendicular to the linear axis, the mobile phone moves the cards in the multitasking interface to the right successively after detecting a swipe right operation performed by the user along the first direction in the multitasking interface, or the mobile phone automatically moves the cards in the multitasking interface to the right successively, to move the card that the user indicates to delete to the middle, and fully display the card. After the mobile phone detects the swipe up operation performed by the user on a card on the right in the multitasking interface along the direction perpendicular to the linear axis, the mobile phone moves the cards in the multitasking interface to the left successively after detecting a swipe left operation performed by the user along the first direction in the multitasking interface or the mobile phone automatically moves the cards in the multitasking interface to the left successively, to move the card that the user indicates to operate to the middle, and fully display the card. In another technical solution, after detecting a swipe up operation performed by the user on the card on the left or right in the multitasking interface along the direction perpendicular to the linear axis, the mobile phone automatically moves the card that the user indicates to delete to the middle, and can fully display the card. Then, after the mobile phone detects a swipe up operation performed by the user on the card that is currently displayed in the middle, the middle card disappears, and the middle card is deleted.

In the conventional technology, after the mobile phone detects that the user swipes up the target card arranged in parallel in the multitasking interface as shown in FIG. 3B, the target card is paned with the hand and disappears. In the solution for deleting a single card provided in this embodiment of this application, the user may still swipe up on the target card as in the conventional technology, and a deletion effect that has dynamic visual impact that the target card disappears after the target card is pushed down and flies into the touchscreen is achieved without increasing learning costs of the deletion operation.

### Deletion of all cards:

In some other embodiments, the mobile phone may further delete all cards based on an operation indicated by the user. That is, the mobile phone may stop displaying all the cards, and the cards disappear from the touchscreen. For example, the mobile phone may delete all the cards in the multitasking interface shown in FIG. 3A to FIG. 6 or FIG. 8A to FIG. 10B. Applications corresponding to all the cards are closed, and resources such as memory occupied by these applications are released in the background. For example, as shown in FIG. 14, an operation of deleting all the cards indicated by the user may be an operation of tapping a deletion control such as a rubbish bin control 1401 by the user.

In a technical solution, after the mobile phone detects the operation of deleting all the cards indicated by the user, all the cards are flipped to the back of the touchscreen by a preset angle by using a line parallel to the linear axis as an axis, and then disappear, and the mobile phone deletes all the cards. A dynamic visual effect provided for the user is that all the cards fly into the touchscreen and disappear.

For example, in a case shown in FIG. 3B, after the mobile phone detects an operation of tapping the rubbish bin control by the user, as shown in FIG. 15(a) to FIG. 15(c), all the cards are simultaneously flipped to the back of the touchscreen. After the angles by which all the cards are flipped to the back of the touchscreen are greater than or equal to the preset angle 6, all the cards disappear, and the mobile phone deletes all the cards. A dynamic visual effect provided for the user is that all the cards fly into the touchscreen and disappear at the same time.

For another example, in a case shown in FIG. 3B, after the mobile phone detects an operation of tapping the rubbish bin control by the user, as shown in FIG. 16(a) to FIG. 16(d), different cards are successively flipped to the back of the touchscreen in a preset order (for example, from right to left or from left to right). In addition, after angles by which all the cards are flipped to the back of the touchscreen are greater than or equal to a preset angle, all the cards successively disappear, and the mobile phone deletes all the cards. Therefore, senses of order, hierarchy, and dynamics of the deletion process can be provided for the user.

For another example, in a case shown in FIG. 8C, after the mobile phone detects an operation of tapping the rubbish bin control by the user, as shown in FIG. 17(a) to FIG. 17(d), different cards are successively flipped to the back of the touchscreen in a preset order. In addition, after angles by which all the cards are flipped to the back of the touchscreen are greater than or equal to a preset angle, all the cards successively disappear, and the mobile phone deletes all the cards.

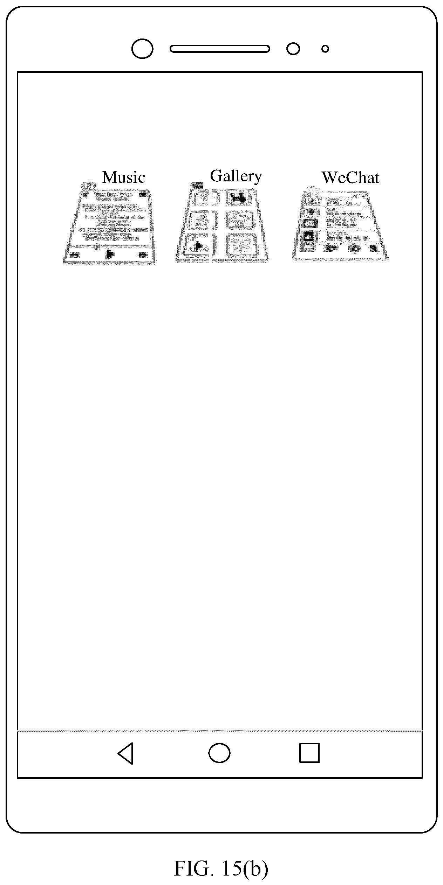

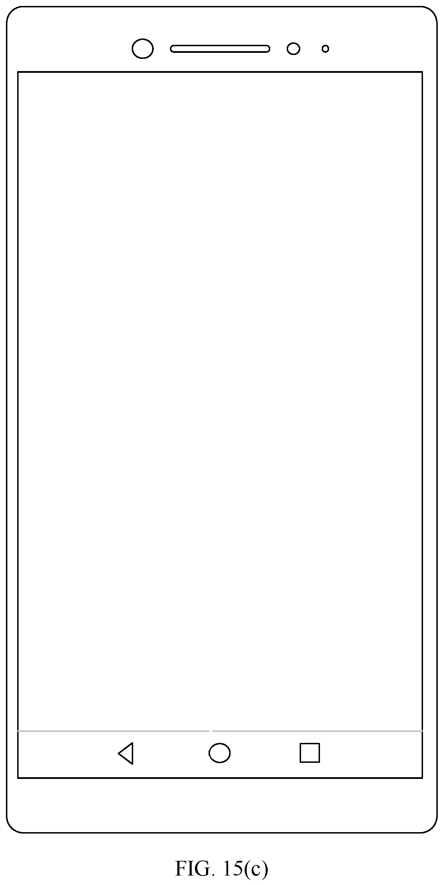

For another example, in cases shown in FIG. 8A to FIG. 10B, after detecting an operation of tapping the rubbish bin control by the user, the mobile phone first switches to a state that is shown in FIG. 3B and in which edges of the cards are arranged in parallel with the edges of the mobile phone. Then, as shown in FIG. 15, FIG. 16, FIG. 17, or the like, after angles by which all the cards are flipped to the back of the touchscreen are greater than or equal to the preset angle 6, all the cards disappear, and the mobile phone deletes all the cards.

For another example, after detecting an operation of tapping the rubbish bin control by the user, the mobile phone first scales down the cards, to fully display the three cards, then flips the cards to the back of the touchscreen, and deletes the cards.

For another example, in cases shown in FIG. 8A to FIG. 10B, after detecting an operation of tapping the rubbish bin control by the user, the mobile phone may switch to a state in which the cards are arranged in parallel with edges of the touchscreen shown in FIG. 3B, scale down the three cards to fully display the three cards, then flip the three cards to the back of the touchscreen, and delete the three cards.

In a process in which all the cards are flipped to the back of the touchscreen, a visual feeling presented to the user is that all the cards are scaled down. That is, the user feels that all the cards fly into the touchscreen, fly increasingly farther, and finally disappear.

In another technical solution, after the mobile phone detects an operation of deleting all the cards indicated by the user, all the cards are flipped to the back of the touchscreen by a preset angle, are moved up by a preset distance, and then disappear, and all the cards are deleted. All the cards may be first flipped and then moved, or may be moved and then flipped, or may be moved while being flipped. This is not limited in this embodiment of this application. This can provide the user with dynamic visual experience that all the cards disappear after flying up and flying into the touchscreen.

In another technical solution, after the mobile phone detects an operation of deleting all the cards indicated by the user, all the cards are flipped to the back of the touchscreen by a preset angle, are scaled down to a proportion, and then disappear, and all the cards are deleted. In this way, an effect of scaling down all the cards is more obvious, and the user also feels, more obviously, that all the cards fly increasingly farther in the flipping process. All the cards may be first flipped and then scaled down, or may be scaled down while being flipped. This is not limited in this embodiment of this application.

In another technical solution, after the mobile phone detects an operation of deleting all the cards indicated by the user, all the cards are moved up by a preset distance, are flipped to the back of the touchscreen by a preset angle, are scaled down to a proportion, and then disappear, and all the cards are deleted. This can provide the user with dynamic visual experience that all the cards fly up and fly into the touchscreen, fly increasingly farther and smaller, and finally disappear.

In some embodiments, after deleting all the cards from the multitasking interface, the mobile phone may automatically display a preset interface. For example, the preset interface may be a home screen. For example, if the mobile phone successively opens a theme application, a clock application, and a manager application, after entering the multitasking interface from the home screen, the mobile phone may display a multitasking interface shown in FIG. 18(a). For a schematic diagram of a process in which after the mobile phone detects an operation of deleting all the cards indicated by the user, the different cards are successively flipped to the back of the touchscreen by the preset angle and then disappear, refer to FIG. 18(a) to FIG. 18(e).

It should be noted that, although only three cards are displayed in the multitasking interface, after detecting an operation of deleting all the cards indicated by the user, the mobile phone may not only delete the three cards displayed in the multitasking interface, but also delete all other cards stored on the mobile phone, close applications corresponding to the other cards, and release resources such as memory occupied by these applications.

### Adding of a card:

When the mobile phone runs Music, Gallery, and WeChat, the mobile phone opens a sixth application after leaving a multitasking interface.

In some embodiments, the mobile phone subsequently enters a multitasking interface from a home screen. A sixth card corresponding to the sixth application is located in a middle focal position, the first card and the second card are moved left and then disappear, and the third card is moved left. After the moving, the third card occupies a position in which the first card is located before the moving, and is turned to a state of the first card that exists before the moving. For example, if the sixth application is TikTok (Tik Tok), the multitasking interface entered from the home screen may be shown in FIG. 19A. A last used application is usually reused by the user. Therefore, the sixth card is located in the middle, so that the user can quickly focus on a card corresponding to the last used sixth application, to quickly open a user interface of the last used sixth application.

In some other embodiments, the mobile phone subsequently enters the multitasking interface from the user interface of the sixth application. The sixth card corresponding to the sixth application is located on the right, the first card is moved left and then disappears, and the second card and the third card are moved left. After the moving, the second card occupies a position in which the first card is located before the moving, and is turned to a state of the first card that exists before the moving. The third card occupies a middle local position in which the second card is located before the moving, and is turned to a state of the second card that exists before the moving. The sixth card occupies a position in which the third card is located before the moving, and is turned to a state of the third card that exists before the moving. For example, if the sixth application is TikTok, the multitasking interface entered from the sixth application may be shown in FIG. 19B.

It should be noted that, when the user returns to the multitasking interface after opening the sixth application, the user usually wants to open another application by using a card in the multitasking interface. Therefore, the sixth card in the multitasking interface is not in the middle. A card corresponding to a previously opened historical application is located in the middle focal position. The sixth card is displayed on the right, and cards corresponding to two historical applications may be displayed on the left and in the middle, so that the user can quickly open the historical application by using the card.

The foregoing is mainly described by using an example in which a card corresponding to an application that is first opened is arranged on the left, and a card corresponding to an application that is later opened is arranged on the right. When a card corresponding to an application that is first opened is arranged on the right, and a card corresponding to an application that is later opened is arranged on the left, the card processing method described in the foregoing embodiment may also be applicable.

The foregoing is mainly described by using an example in which the mobile phone is in a portrait screen state. The card processing method described in the foregoing embodiment is also applicable to a landscape screen state of the mobile phone. For example, when the mobile phone runs Music, Gallery, and WeChat, for a multitasking interface in the landscape screen state, refer to FIG. 20.

With reference to the foregoing embodiments and the corresponding accompanying drawings, another embodiment of this application provides a card processing method. The method may be implemented on an electronic device having a structure shown in FIG. 1. As shown in FIG. 21, the method may include the following steps.

2101: The electronic device detects an operation of opening a multitasking interface.

2102: The electronic device displays a first multitasking interface in response to the operation of opening a multitasking interface, where the first multitasking interface includes a first card, a second card, and a third card that are arranged in parallel along a first direction.

For example, the first multitasking interface may be an interface shown in FIG. 3B, or an interface shown in each of FIG. 8A to FIG. 10B.

The first card, the second card, and the third card each correspond to a different application, the second card is located between the first card and the third card, the second card is fully displayed, the first card and the third card each are partially displayed, and displayed parts of the first card and the third card are parts close to the second card.

2103: The electronic device detects a swipe up operation performed by the user on a target card on the touchscreen, where the target card is the first card, the second card, or the third card.

2104: The electronic device flips the target card to the back of the touchscreen, where in a process in which the target card is flipped to the back of the touchscreen, content of the target card faces upward.

2105: The electronic device deletes the target card.

For example, when the target card is the second card in FIG. 3B, for a deletion process, refer to FIG. 12A-1 to FIG. 12A-4.

2106: The electronic device moves a card adjacent to the target card along the first direction, to fill in an area that is left after the target card is deleted.

The first direction may be a horizontal direction or a substantially horizontal direction.

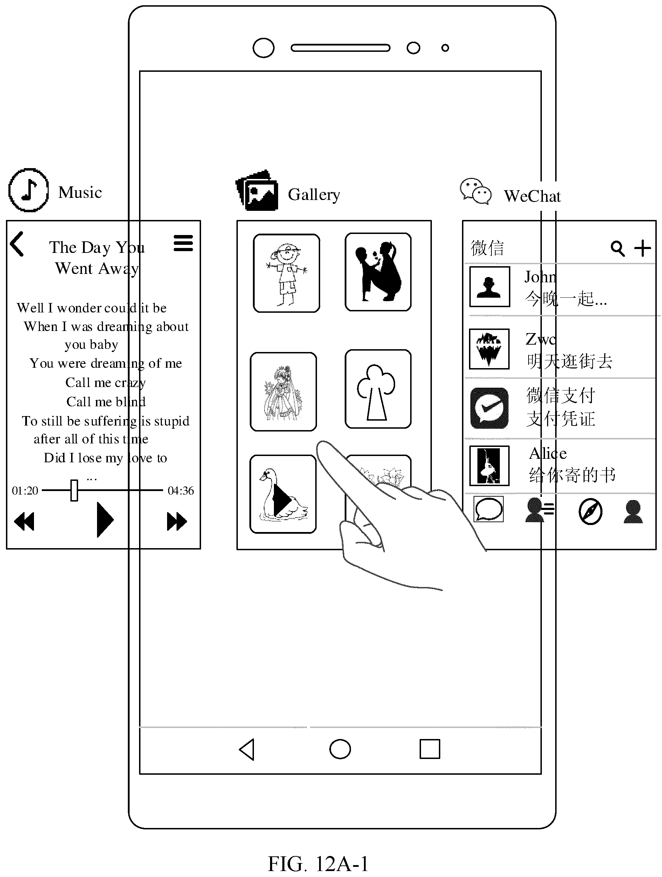

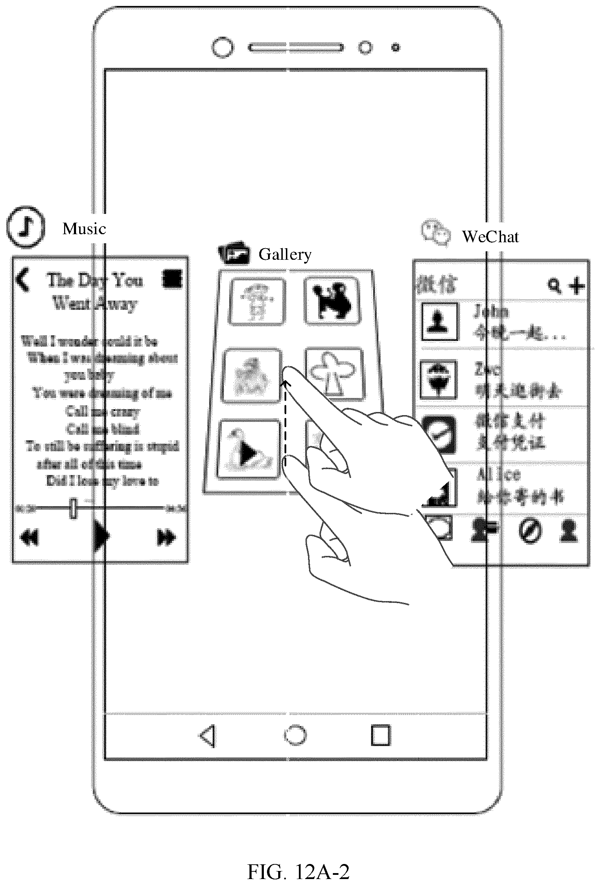

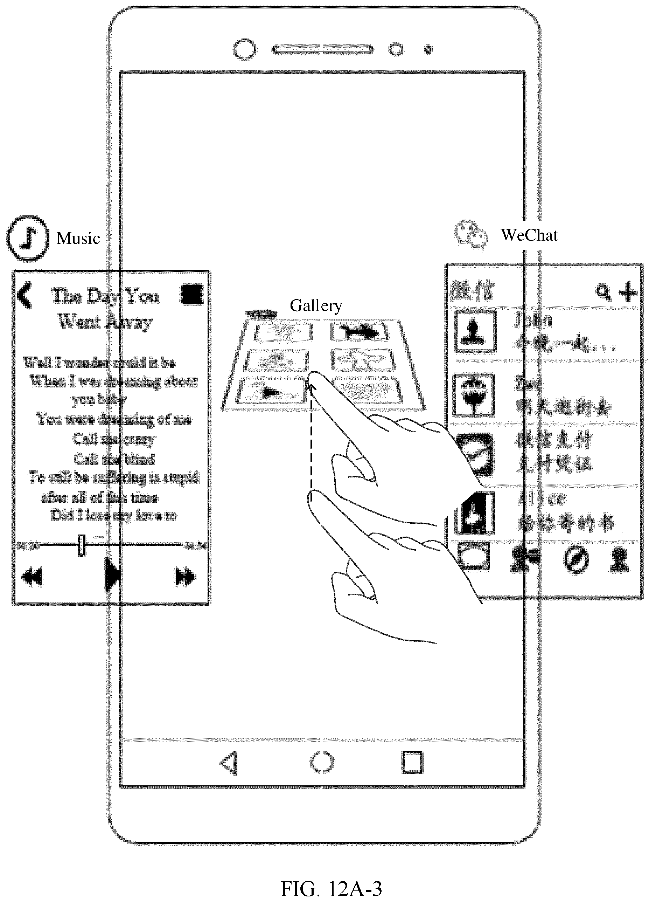

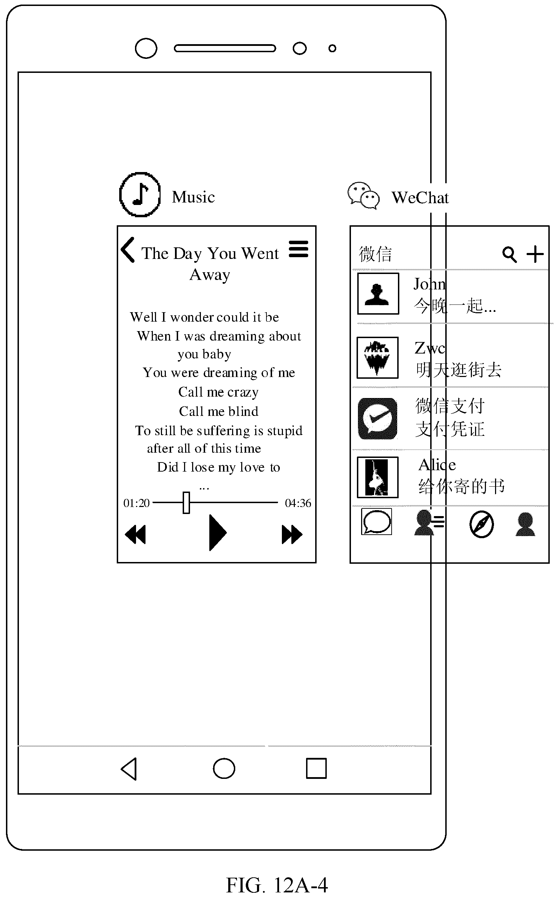

For example, as shown in FIG. 12A-4, after the second card is deleted, the first card may be moved, to fill in an area that is left after the second card is deleted.

2107: The electronic device closes an application corresponding to the target card, and releases resources occupied in the background by the application corresponding to the target card, where the resources include memory.

In the solution described in step 2101 to step 2107, to delete the target card in the multitasking interface, the electronic device may flip the target card to the back of the screen and then delete the target card. In this way, the user is provided with dynamic visual experience that the card flies into the touchscreen and disappears.

An embodiment of this application further provides an electronic device. The electronic device may include a detection unit, a display unit, a flipping unit, a deletion unit, a moving unit, and the like. The detection unit may be configured to detect an operation of opening a multitasking interface. The display unit may be configured to display a first multitasking interface in response to the operation of opening a multitasking interface, where the first multitasking interface includes a first card, a second card, and a third card that are arranged in parallel along a first direction. The detection unit may be further configured to detect a swipe up operation performed by the user on a target card on the touchscreen, where the target card is the first card, the second card, or the third card. The flipping unit may be configured to flip the target card to the back of the touchscreen, where in a process in which the target card is flipped to the back of the touchscreen, content of the target card faces upward The deletion unit may be configured to delete the target card. The moving unit may be configured to move a card adjacent to the target card along the first direction, to fill in an area that is left after the target card is deleted.

An embodiment of this application further provides an electronic device, including one or more processors, a memory, and a touchscreen. The touchscreen is configured to detect a touch operation of a user, and display an interface. The memory stores code. When the code is executed by the one or more processors, the electronic device performs the steps in the foregoing embodiment.

For example, when the electronic device is the mobile phone shown in FIG. 1, the processor in the electronic device may be the processor 110 in FIG. 1, the memory in the electronic device may be the internal memory 121 in FIG. 1, and the touchscreen in the electronic device may include the display 194 and the touch sensor 180K in FIG. 1.

An embodiment of this application further provides a computer storage medium. The computer storage medium stores computer instructions. When the computer instructions are run on an electronic device, the electronic device is enabled to perform the related method steps, to implement the card processing method in the foregoing embodiment.

An embodiment of this application further provides a computer program product. When the computer program product is run on a computer, the computer is enabled to perform the foregoing related steps, to implement the card processing method in the foregoing embodiment.

In addition, an embodiment of this application further provides an apparatus. The apparatus may be specifically a chip, a component, or a module. The apparatus may include a processor and a memory that are connected. The memory is configured to store computer-executable instructions, and when the apparatus runs, the processor may execute the computer-executable instructions stored in the memory, so that the chip performs the card processing method in the foregoing method embodiment.

The electronic device, the computer storage medium, the computer program product, or the chip provided in the embodiments of this application is configured to perform the corresponding method provided above. Therefore, for beneficial effects that can be achieved, refer to the beneficial effects in the corresponding method provided above. Details are not described herein again.

The foregoing descriptions about implementations allow a person skilled in the art to understand that, for convenient and brief description, division into the foregoing function modules is taken as an example for illustration. In actual application, the foregoing functions can be allocated to different modules and implemented according to a requirement, in other words, an inner structure of an apparatus is divided into different function modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division. There may be another division manner in actual implementation. For example, a plurality of units or components may be combined or may be integrated into another apparatus, or some features may be ignored or not be performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate components may or may not be physically separate, and components displayed as units may be one or more physical units, that is, may be located in one place, or may be distributed on a plurality of different places. Some or all of the units may be selected based on an actual requirement to achieve an objective of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of the embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the method described in the embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An electronic device (100), comprising:
one or more processors (110);
a memory (121); and
a touchscreen, configured to detect a touch operation of a user and display an interface, wherein
the memory stores code, and when the code is executed by the one or more processors, the electronic device is enabled to perform the following steps:
detecting an operation of opening a multitasking interface;
displaying a first multitasking interface in response to the operation of opening a multitasking interface, wherein the first multitasking interface comprises a first card, a second card, and a third card that are arranged in parallel along a first direction; and
the first card, the second card, and the third card each correspond to a different application, the second card is located between the first card and the third card, the second card is fully displayed, the first card and the third card each are partially displayed, and displayed parts of the first card and the third card are parts close to the second card;
detecting a swipe up operation performed by the user on a target card on the touchscreen, wherein the target card is the first card, the second card, or the third card;
flipping the target card to the back of the touchscreen, wherein in a process in which the target card is flipped to the back of the touchscreen, content of the target card faces upward, wherein a visual effect is created for the target card such that the target card appears to flip around and to the back;
deleting the target card; and
moving a card adjacent to the target card along the first direction, to fill in an area that is left after the target card is deleted,
wherein that when the code is executed by the one or more processors, the electronic device is enabled to flip the target card to the back of the touchscreen is specifically:
flipping the target card to the back of the touchscreen based on a distance by which the user swipes up on the target card on the touchscreen, wherein an angle by which the target card is flipped to the back of the touchscreen is directly proportional to the distance by which the user swipes up;
automatically deleting the target card after the angle by which the target card is flipped to the back of the touchscreen is greater than or equal to a first preset angle and it is detected that the user's hand leaves the touchscreen;
if it is detected that after swiping up on the target card, the user's hand does not leave the touchscreen but swipes down, flipping the target card back to the front of the touchscreen based on a distance by which the user swipes down, wherein
in a process in which the target card is flipped back to the front of the touchscreen, the content of the target card faces upward, and an angle by which the target card is flipped to the front of the touchscreen is directly proportional to the distance by which the user swipes down; and
if the target card is flipped back to a state that exists before the target card is flipped to the back of the touchscreen, stopping flipping the target card to the front of the touchscreen.

2. The electronic device according to claim 1, wherein when the code is executed by the one or more processors, the electronic device is further enabled to perform the following step:
after deleting the target card, closing an application corresponding to the target card, and releasing resources occupied in the background by the application corresponding to the target card, wherein the resources comprise memory.

3. The electronic device according to claim 1 or 2, wherein the first direction is substantially horizontal on the touchscreen.

4. The electronic device according to any one of claims 1 to 3, wherein the target card is the second card, and when the code is executed by the one or more processors, the electronic device is further enabled to perform the following step:
if a swipe up operation performed by the user on another card in the first multitasking interface on the touchscreen is detected, prompting the user that the another card cannot be deleted, wherein the another card is the first card or the third card.

5. The electronic device according to any one of claims 1 to 3, wherein the target card is the second card, and when the code is executed by the one or more processors, the electronic device is further enabled to perform the following steps:
if a swipe up operation performed by the user on another card in the first multitasking interface on the touchscreen is detected, prompting the user to move the another card, wherein the another card is the first card or the third card;
if a swipe operation performed by the user on the touchscreen along the first direction is detected, moving the first card, the second card, and the third card, so that the another card is fully displayed;
flipping the another card to the back of the touchscreen after detecting the swipe up operation performed by the user on the another card on the touchscreen; and
deleting the another card.

6. The electronic device according to any one of claims 1 to 5, wherein in the first multitasking interface, edges of each of the first card, the second card, and the third card are parallel to edges of the electronic device; or
in the first multitasking interface, edges of the second card are parallel to edges of the electronic device, the first card is rotated counterclockwise relative to the second card by a second preset angle, and the third card is rotated clockwise relative to the second card by the second preset angle; or
in the first multitasking interface, edges of the second card are parallel to edges of the electronic device, the first card is rotated clockwise relative to the second card by a second preset angle, and the third card is rotated counterclockwise relative to the second card by the second preset angle; or
in the first multitasking interface, edges of the second card are parallel to edges of the electronic device, and the first card and the third card each are rotated to the back of the touchscreen by a third preset angle; or
in the first multitasking interface, edges of the second card are parallel to edges of the electronic device, and the first card and the third card each are rotated to the front of the touchscreen by a third preset angle; or
in the first multitasking interface, edges of the second card are parallel to edges of the electronic device, and the first card and the third card each are rotated to the front or the back of the touchscreen by a third preset angle.

7. The electronic device according to any one of claims 1 to 6, wherein that when the code is executed by the one or more processors, the electronic device is enabled to detect the operation of opening a multitasking interface is specifically:
when a user interface of an application corresponding to the third card is displayed, detecting the operation of opening a multitasking interface.

8. The electronic device according to any one of claims 1 to 7, wherein when the code is executed by the one or more processors, the electronic device is further enabled to perform the following steps:
after displaying the first multitasking interface, displaying a home screen if an operation of displaying a home screen is detected; and
displaying a second multitasking interface if an operation of opening a multitasking interface is detected, wherein the second multitasking interface comprises the second card and the third card that are arranged in parallel along the first direction, the third card is fully displayed, and a part that is of the second card and that is close to the third card is displayed.

9. The electronic device according to any one of claims 1 to 8, wherein when the code is executed by the one or more processors, the electronic device is further enabled to perform the following steps:
after the first multitasking interface is displayed, if an operation of deleting all cards is detected, separately flipping the first card, the second card, and the third card to the back of the touchscreen in response to the operation of deleting all cards, wherein
in a process in which the first card, the second card, and the third card are flipped to the back of the touchscreen, content of the first card, the second card, and the third card faces upward; and
deleting the first card, the second card, and the third card after angles by which the first card, the second card, and the third card are flipped to the back of the touchscreen are greater than or equal to a fourth preset angle.

10. The electronic device according to any one of claims 1 to 8, wherein when the code is executed by the one or more processors, the electronic device is further enabled to perform the following steps:
after the first multitasking interface is displayed, if an operation of deleting all cards is detected, successively flipping the first card, the second card, and the third card to the back of the touchscreen in a preset order in response to the operation of deleting all cards, wherein
in a process in which the first card, the second card, and the third card are flipped to the back of the touchscreen, content of the first card, the second card, and the third card faces upward; and
successively deleting the first card, the second card, and the third card after angles by which the first card, the second card, and the third card are flipped to the back of the touchscreen are greater than or equal to a fourth preset angle.

11. The electronic device according to claim 9 or 10, wherein when the code is executed by the one or more processors, the electronic device is further enabled to perform the following step:
after deleting the first card, the second card, and the third card, closing applications corresponding to all the cards, and releasing resources occupied in the background by the applications corresponding to all the cards, wherein the resources comprise memory.

12. The electronic device according to any one of claims 9 to 11, wherein when the code is executed by the one or more processors, the electronic device is further enabled to perform the following step: displaying the home screen after deleting the first card, the second card, and the third card.

## Patentansprüche

1. Elektronische Vorrichtung (100), umfassend:
einen oder mehrere Prozessoren (110);
einen Speicher (121); und
einen Berührungsbildschirm, der dazu konfiguriert ist, einen Berührungsvorgang eines Benutzers zu erkennen und eine Schnittstelle darzustellen, wobei
der Speicher einen Code speichert und, wenn der Code durch den einen oder die mehreren Prozessoren ausgeführt wird, die elektronische Vorrichtung in die Lage versetzt wird, die folgenden Schritte durchzuführen:
Erkennen eines Vorgangs zum Öffnen einer Multitasking-Schnittstelle;
Darstellen einer ersten Multitasking-Schnittstelle als Reaktion auf den Vorgang zum Öffnen einer Multitasking-Schnittstelle, wobei die erste Multitasking-Schnittstelle eine erste Karte, eine zweite Karte und eine dritte Karte, die parallel entlang einer ersten Richtung angeordnet sind, umfasst; und
die erste Karte, die zweite Karte und die dritte Karte jeweils einer anderen Anwendung entsprechen, sich die zweite Karte zwischen der ersten Karte und der dritten Karte befindet, die zweite Karte vollständig dargestellt ist, die erste Karte und die dritte Karte jeweils teilweise dargestellt sind und dargestellte Teile der ersten Karte und der dritten Karte Teile sind, die in der Nähe der zweiten Karte sind;
Erkennen eines Nach-oben-Wischvorgangs, der durch den Benutzer auf einer Zielkarte auf dem Berührungsbildschirm durchgeführt wird, wobei es sich bei der Zielkarte um die erste Karte, die zweite Karte oder die dritte Karte handelt;
Umdrehen der Zielkarte auf die Rückseite des Berührungsbildschirms, wobei bei einem Prozess, bei dem die Zielkarte auf die Rückseite des Berührungsbildschirms umgedreht wird, ein Inhalt der Zielkarte nach oben zeigt, wobei ein visueller Effekt für die Zielkarte erzeugt wird, sodass sich die Zielkarte um- und auf die Rückseite zu drehen scheint;
Löschen der Zielkarte; und
Verschieben einer zu der Zielkarte benachbarten Karte entlang der ersten Richtung, um einen Bereich, der nach dem Löschen der Zielkarte verbleibt, auszufüllen,
wobei, dass, wenn der Code durch den einen oder die mehreren Prozessoren ausgeführt wird, die elektronische Vorrichtung in die Lage versetzt wird, die Zielkarte auf die Rückseite des Berührungsbildschirms umzudrehen, insbesondere Folgendes bedeutet:
Umdrehen der Zielkarte auf die Rückseite des Berührungsbildschirms basierend auf einer Strecke, um die der Benutzer auf der Zielkarte auf dem Berührungsbildschirm nach oben wischt, wobei ein Winkel, um den die Zielkarte auf die Rückseite des Berührungsbildschirms umgedreht wird, direkt proportional zu der Strecke ist, um die der Benutzer nach oben wischt;
automatisches Löschen der Zielkarte, nachdem der Winkel, um den die Zielkarte auf die Rückseite des Berührungsbildschirms umgedreht wird, größer als ein erster voreingestellter Winkel oder gleich diesem ist und erkannt wird, dass die Hand des Benutzers den Berührungsbildschirm verlässt;
wenn erkannt wird, dass nach dem Nach-oben-Wischen auf der Zielkarte die Hand des Benutzers den Berührungsbildschirm nicht verlässt, sondern nach unten wischt, Umdrehen der Zielkarte zurück auf die Vorderseite des Berührungsbildschirms basierend auf einer Strecke, um die der Benutzer nach unten wischt, wobei
bei einem Prozess, bei dem die Zielkarte zurück auf die Vorderseite des Berührungsbildschirms umgedreht wird, der Inhalt der Zielkarte nach oben zeigt und ein Winkel, um den die Zielkarte auf die Vorderseite des Berührungsbildschirms umgedreht wird, direkt proportional zu der Strecke ist, um die der Benutzer nach unten wischt; und
wenn die Zielkarte zurück in einen Zustand umgedreht wird, der besteht, bevor die Zielkarte auf die Rückseite des Berührungsbildschirms umgedreht wird, Stoppen des Umdrehens der Zielkarte auf die Vorderseite des Berührungsbildschirms.

2. Elektronische Vorrichtung nach Anspruch 1, wobei, wenn der Code durch den einen oder die mehreren Prozessoren ausgeführt wird, die elektronische Vorrichtung ferner in die Lage versetzt wird, den folgenden Schritt durchzuführen:
nach dem Löschen der Zielkarte, Schließen einer der Zielkarte entsprechenden Anwendung und Freigeben von im Hintergrund durch die der Zielkarte entsprechende Anwendung belegten Ressourcen, wobei die Ressourcen einen Speicher umfassen.

3. Elektronische Vorrichtung nach Anspruch 1 oder 2, wobei die erste Richtung im Wesentlichen horizontal auf dem Berührungsbildschirm verläuft.

4. Elektronische Vorrichtung nach einem der Ansprüche 1 bis 3, wobei es sich bei der Zielkarte um die zweite Karte handelt und, wenn der Code durch den einen oder die mehreren Prozessoren ausgeführt wird, die elektronische Vorrichtung ferner in die Lage versetzt wird, den folgenden Schritt durchzuführen:
wenn ein Nach-oben-Wischvorgang, der durch den Benutzer auf einer anderen Karte in der ersten Multitasking-Schnittstelle auf dem Berührungsbildschirm durchgeführt wird, erkannt wird, Hinweisen des Benutzers darauf, dass die andere Karte nicht gelöscht werden kann, wobei es sich bei der anderen Karte um die erste Karte oder die dritte Karte handelt.

5. Elektronische Vorrichtung nach einem der Ansprüche 1 bis 3, wobei es sich bei der Zielkarte um die zweite Karte handelt und, wenn der Code durch den einen oder die mehreren Prozessoren ausgeführt wird, die elektronische Vorrichtung ferner in die Lage versetzt wird, die folgenden Schritte durchzuführen:
wenn ein Nach-oben-Wischvorgang, der durch den Benutzer auf einer anderen Karte in der ersten Multitasking-Schnittstelle auf dem Berührungsbildschirm durchgeführt wird, erkannt wird, Hinweisen des Benutzers darauf, die andere Karte zu verschieben, wobei es sich bei der anderen Karte um die erste Karte oder die dritte Karte handelt;
wenn ein Wischvorgang, der durch den Benutzer auf dem Berührungsbildschirm entlang der ersten Richtung durchgeführt wird, erkannt wird, Verschieben der ersten Karte, der zweiten Karte und der dritten Karte so, dass die andere Karte vollständig dargestellt wird;
Umdrehen der anderen Karte auf die Rückseite des Berührungsbildschirms, nach dem Erkennen des Nach-oben-Wischvorgangs, der durch den Benutzer auf der anderen Karte auf dem Berührungsbildschirm durchgeführt wird; und
Löschen der anderen Karte.

6. Elektronische Vorrichtung nach einem der Ansprüche 1 bis 5, wobei in der ersten Multitasking-Schnittstelle Kanten von jeder der ersten Karte, der zweiten Karte und der dritten Karte parallel zu Kanten der elektronischen Vorrichtung verlaufen; oder
in der ersten Multitasking-Schnittstelle Kanten der zweiten Karte parallel zu Kanten der elektronischen Vorrichtung verlaufen, die erste Karte relativ zu der zweiten Karte um einen zweiten voreingestellten Winkel gegen den Uhrzeigersinn gedreht ist und die dritte Karte relativ zu der zweiten Karte um den zweiten voreingestellten Winkel im Uhrzeigersinn gedreht ist; oder
in der ersten Multitasking-Schnittstelle Kanten der zweiten Karte parallel zu Kanten der elektronischen Vorrichtung verlaufen, die erste Karte relativ zu der zweiten Karte um einen zweiten voreingestellten Winkel im Uhrzeigersinn gedreht ist und die dritte Karte relativ zu der zweiten Karte um den zweiten voreingestellten Winkel gegen den Uhrzeigersinn gedreht ist; oder in der ersten Multitasking-Schnittstelle Kanten der zweiten Karte parallel zu Kanten der elektronischen Vorrichtung verlaufen und die erste Karte und die dritte Karte jeweils um einen dritten voreingestellten Winkel zu der Rückseite des Berührungsbildschirms gedreht sind; oder
in der ersten Multitasking-Schnittstelle Kanten der zweiten Karte parallel zu Kanten der elektronischen Vorrichtung verlaufen und die erste Karte und die dritte Karte jeweils um einen dritten voreingestellten Winkel zu der Vorderseite des Berührungsbildschirms gedreht sind; oder
in der ersten Multitasking-Schnittstelle Kanten der zweiten Karte parallel zu Kanten der elektronischen Vorrichtung verlaufen und die erste Karte und die dritte Karte jeweils um einen dritten voreingestellten Winkel zu der Vorderseite oder der Rückseite des Berührungsbildschirms gedreht sind.

7. Elektronische Vorrichtung nach einem der Ansprüche 1 bis 6, wobei, dass die elektronische Vorrichtung, wenn der Code durch den einen oder die mehreren Prozessoren ausgeführt wird, in die Lage versetzt wird, den Vorgang zum Öffnen einer Multitasking-Schnittstelle zu erkennen, insbesondere Folgendes bedeutet:
wenn eine Benutzerschnittstelle einer der dritten Karte entsprechenden Anwendung dargestellt wird, Erkennen des Vorgangs zum Öffnen einer Multitasking-Schnittstelle.

8. Elektronische Vorrichtung nach einem der Ansprüche 1 bis 7, wobei, wenn der Code durch den einen oder die mehreren Prozessoren ausgeführt wird, die elektronische Vorrichtung ferner in die Lage versetzt wird, die folgenden Schritte durchzuführen:
nach dem Darstellen der ersten Multitasking-Schnittstelle Darstellen eines Startbildschirms, wenn ein Vorgang zum Darstellen eines Startbildschirms erkannt wird; und
Darstellen einer zweiten Multitasking-Schnittstelle, wenn ein Vorgang zum Öffnen einer Multitasking-Schnittstelle erkannt wird, wobei die zweite Multitasking-Schnittstelle die zweite Karte und die dritte Karte, die parallel entlang der ersten Richtung angeordnet sind, umfasst, die dritte Karte vollständig dargestellt wird und ein Teil, der zu der zweiten Karte gehört und der in der Nähe der dritten Karte ist, dargestellt wird.

9. Elektronische Vorrichtung nach einem der Ansprüche 1 bis 8, wobei, wenn der Code durch den einen oder die mehreren Prozessoren ausgeführt wird, die elektronische Vorrichtung ferner in die Lage versetzt wird, die folgenden Schritte durchzuführen:
nachdem die erste Multitasking-Schnittstelle dargestellt worden ist, wenn ein Vorgang zum Löschen sämtlicher Karten erkannt wird, getrenntes Umdrehen der ersten Karte, der zweiten Karte und der dritten Karte auf die Rückseite des Berührungsbildschirms als Reaktion auf den Vorgang zum Löschen sämtlicher Karten, wobei bei einem Prozess, bei dem die erste Karte, die zweite Karte und die dritte Karte auf die Rückseite des Berührungsbildschirms umgedreht werden, ein Inhalt der ersten Karte, der zweiten Karte und der dritten Karte nach oben zeigt; und
Löschen der ersten Karte, der zweiten Karte und der dritten Karte, nachdem die Winkel, um welche die erste Karte, die zweite Karte und die dritte Karte auf die Rückseite des Berührungsbildschirms umgedreht werden, größer als ein vierter voreingestellter Winkel oder gleich diesem sind.

10. Elektronische Vorrichtung nach einem der Ansprüche 1 bis 8, wobei, wenn der Code durch den einen oder die mehreren Prozessoren ausgeführt wird, die elektronische Vorrichtung ferner in die Lage versetzt wird, die folgenden Schritte durchzuführen:
nachdem die erste Multitasking-Schnittstelle dargestellt worden ist, wenn ein Vorgang zum Löschen sämtlicher Karten erkannt wird, aufeinanderfolgendes Umdrehen der ersten Karte, der zweiten Karte und der dritten Karte auf die Rückseite des Berührungsbildschirms in einer voreingestellten Reihenfolge als Reaktion auf den Vorgang zum Löschen sämtlicher Karten, wobei
bei einem Prozess, bei dem die erste Karte, die zweite Karte und die dritte Karte auf die Rückseite des Berührungsbildschirms umgedreht werden, ein Inhalt der ersten Karte, der zweiten Karte und der dritten Karte nach oben zeigt; und
aufeinanderfolgendes Löschen der ersten Karte, der zweiten Karte und der dritten Karte, nachdem die Winkel, um welche die erste Karte, die zweite Karte und die dritte Karte auf die Rückseite des Berührungsbildschirms umgedreht werden, größer als ein vierter voreingestellter Winkel oder gleich diesem sind.

11. Elektronische Vorrichtung nach Anspruch 9 oder 10, wobei, wenn der Code durch den einen oder die mehreren Prozessoren ausgeführt wird, die elektronische Vorrichtung ferner in die Lage versetzt wird, den folgenden Schritt durchzuführen:
nach dem Löschen der ersten Karte, der zweiten Karte und der dritten Karte Schließen von den sämtlichen Karten entsprechenden Anwendungen und Freigeben von im Hintergrund durch die sämtlichen Karten entsprechenden Anwendungen belegten Ressourcen, wobei die Ressourcen einen Speicher umfassen.

12. Elektronische Vorrichtung nach einem der Ansprüche 9 bis 11, wobei, wenn der Code durch den einen oder die mehreren Prozessoren ausgeführt wird, die elektronische Vorrichtung ferner in die Lage versetzt wird, den folgenden Schritt durchzuführen:
Darstellen des Startbildschirms nach dem Löschen der ersten Karte, der zweiten Karte und der dritten Karte.

## Revendications

1. Dispositif électronique (100), comprenant :
un ou plusieurs processeurs (110) ;
une mémoire (121) ; et
un écran tactile, configuré pour détecter une opération tactile d'un utilisateur et afficher une interface, dans lequel la mémoire stocke un code, et lorsque le code est exécuté par les un ou plusieurs processeurs, le dispositif électronique est en mesure de réaliser les étapes suivantes :
détection d'une opération d'ouverture d'une interface multitâche ; affichage d'une première interface multitâche en réponse à l'opération d'ouverture d'une interface multitâche, dans lequel la première interface multitâche comprend une première carte, une deuxième carte et une troisième carte, agencées parallèlement dans une première direction ; et
la première carte, la deuxième carte et la troisième carte correspondent chacune à une application différente, la deuxième carte est située entre la première carte et la troisième carte, la deuxième carte est entièrement affichée, la première carte et la troisième carte sont chacune partiellement affichées, et des parties affichées de la première carte et de la troisième carte sont des parties proches de la deuxième carte ;
détection d'une opération de balayage vers le haut effectuée par l'utilisateur sur une carte cible sur l'écran tactile, dans lequel la carte cible est la première carte, la deuxième carte ou la troisième carte ;
retournement de la carte cible vers l'arrière de l'écran tactile, dans lequel, dans un processus au cours duquel la carte cible est retournée vers l'arrière de l'écran tactile, un contenu de la carte cible est orienté vers le haut, dans lequel un effet visuel est créé pour la carte cible de sorte que la carte cible apparaît comme se retournant et passe à l'arrière ;
suppression de la carte cible ; et
déplacement d'une carte adjacente à la carte cible dans la première direction, pour remplir une zone laissée après la suppression de la carte cible,
dans lequel, le fait que lorsque le code est exécuté par les un ou plusieurs processeurs, le dispositif électronique est en mesure de retourner la carte cible vers l'arrière de l'écran tactile est spécifiquement :
le retournement de la carte cible vers l'arrière de l'écran tactile sur la base d'une distance sur laquelle l'utilisateur effectue un balayage vers le haut sur la carte cible sur l'écran tactile, dans lequel un angle de retournement de la carte cible vers l'arrière de l'écran tactile est directement proportionnel à la distance sur laquelle l'utilisateur effectue un balayage vers le haut ;
la suppression automatique de la carte cible après que l'angle de retournement de la carte cible vers l'arrière de l'écran tactile est supérieur ou égal à un premier angle prédéfini et qu'il est détecté que la main de l'utilisateur quitte l'écran tactile ;
s'il est détecté qu'après un balayage de la carte cible vers le haut, la main de l'utilisateur ne quitte pas l'écran tactile mais effectue un balayage vers le bas, le retournement de la carte cible vers l'avant de l'écran tactile sur la base d'une distance sur laquelle l'utilisateur effectue un balayage vers le bas, dans lequel
dans un processus au cours duquel la carte cible est retournée de nouveau vers l'avant de l'écran tactile, le contenu de la carte cible est orienté vers le haut, et l'angle de retournement de la carte cible vers l'avant de l'écran tactile est directement proportionnel à la distance sur laquelle l'utilisateur effectue un balayage vers le bas ; et
si la carte cible est retournée de nouveau vers un état antérieur au retournement de la carte cible vers l'arrière de l'écran tactile, l'arrêt du retournement de la carte cible vers l'avant de l'écran tactile.

2. Dispositif électronique selon la revendication 1, dans lequel, lorsque le code est exécuté par les un ou plusieurs processeurs, le dispositif électronique est également en mesure de réaliser l'étape suivante :
après la suppression de la carte cible, fermeture d'une application correspondant à la carte cible et libération de ressources occupées en arrière-plan par l'application correspondant à la carte cible, dans lequel les ressources comprennent une mémoire.

3. Dispositif électronique selon la revendication 1 ou 2, dans lequel la première direction est sensiblement horizontale sur l'écran tactile.

4. Dispositif électronique selon l'une quelconque des revendications 1 à 3, dans lequel la carte cible est la deuxième carte, et lorsque le code est exécuté par les un ou plusieurs processeurs, le dispositif électronique est également en mesure de réaliser l'étape suivante :
si une opération de balayage vers le haut effectuée par l'utilisateur sur une autre carte dans la première interface multitâche sur l'écran tactile est détectée, indication à l'utilisateur que l'autre carte ne peut pas être supprimée, dans lequel l'autre carte est la première carte ou la troisième carte.

5. Dispositif électronique selon l'une quelconque des revendications 1 à 3, dans lequel la carte cible est la deuxième carte, et lorsque le code est exécuté par les un ou plusieurs processeurs, le dispositif électronique est également en mesure de réaliser les étapes suivantes :
si une opération de balayage vers le haut effectuée par l'utilisateur sur une autre carte dans la première interface multitâche sur l'écran tactile est détectée, invitation de l'utilisateur à déplacer l'autre carte, dans lequel l'autre carte est la première carte ou la troisième carte ;
si une opération de balayage effectuée par l'utilisateur sur l'écran tactile dans la première direction est détectée, déplacement de la première carte, de la deuxième carte et de la troisième carte, de sorte que l'autre carte soit entièrement affichée ;
retournement de l'autre carte vers l'arrière de l'écran tactile après la détection de l'opération de balayage vers le haut effectuée par l'utilisateur sur l'autre carte sur l'écran tactile ; et
suppression de l'autre carte.

6. Dispositif électronique selon l'une quelconque des revendications 1 à 5, dans lequel, dans la première interface multitâche, des bords de chacune de la première carte, de la deuxième carte et de la troisième carte sont parallèles à des bords du dispositif électronique ; ou
dans la première interface multitâche, des bords de la deuxième carte sont parallèles à des bords du dispositif électronique, la première carte est pivotée dans le sens antihoraire par rapport à la deuxième carte selon un deuxième angle prédéfini, et la troisième carte est pivotée dans le sens horaire par rapport à la deuxième carte selon le deuxième angle prédéfini ; ou
dans la première interface multitâche, des bords de la deuxième carte sont parallèles à des bords du dispositif électronique, la première carte est pivotée dans le sens horaire par rapport à la deuxième carte selon un deuxième angle prédéfini, et la troisième carte est pivotée dans le sens antihoraire par rapport à la deuxième carte selon le deuxième angle prédéfini ; ou
dans la première interface multitâche, des bords de la deuxième carte sont parallèles à des bords du dispositif électronique, et la première carte et la troisième carte sont chacune pivotées vers l'arrière de l'écran tactile selon un troisième angle prédéfini ; ou
dans la première interface multitâche, des bords de la deuxième carte sont parallèles à des bords du dispositif électronique, et la première carte et la troisième carte sont chacune pivotées vers l'avant de l'écran tactile selon un troisième angle prédéfini ; ou dans la première interface multitâche, des bords de la deuxième carte sont parallèles à des bords du dispositif électronique, et la première carte et la troisième carte sont chacune pivotées vers l'avant ou l'arrière de l'écran tactile selon un troisième angle prédéfini.

7. Dispositif électronique selon l'une quelconque des revendications 1 à 6, dans lequel, le fait que lorsque le code est exécuté par les un ou plusieurs processeurs, le dispositif électronique est en mesure de détecter l'opération d'ouverture d'une interface multitâche est spécifiquement :
lorsqu'une interface utilisateur d'une application correspondant à la troisième carte est affichée, la détection de l'opération d'ouverture d'une interface multitâche.

8. Dispositif électronique selon l'une quelconque des revendications 1 à 7, dans lequel lorsque le code est exécuté par les un ou plusieurs processeurs, le dispositif électronique est également en mesure de réaliser les étapes suivantes :
après l'affichage de la première interface multitâche, affichage d'un écran d'accueil si une opération d'affichage d'un écran d'accueil est détectée ; et
affichage d'une seconde interface multitâche si une opération d'ouverture d'une interface multitâche est détectée, dans lequel la seconde interface multitâche comprend la deuxième carte et la troisième carte agencées parallèlement dans la première direction, la troisième carte est entièrement affichée, et une partie de la deuxième carte proche de la troisième carte est affichée.

9. Dispositif électronique selon l'une quelconque des revendications 1 à 8, dans lequel lorsque le code est exécuté par les un ou plusieurs processeurs, le dispositif électronique est également en mesure de réaliser les étapes suivantes :
après l'affichage de la première interface multitâche, si une opération de suppression de toutes les cartes est détectée, retournement séparé de la première carte, de la deuxième carte et de la troisième carte vers l'arrière de l'écran tactile en réponse à l'opération de suppression de toutes les cartes, dans lequel dans un processus au cours duquel la première carte, la deuxième carte et la troisième carte sont retournées vers l'arrière de l'écran tactile, un contenu de la première carte, de la deuxième carte et de la troisième carte est orienté vers le haut ; et
suppression de la première carte, de la deuxième carte et de la troisième carte après que des angles selon lesquels la première carte, la deuxième carte et la troisième carte sont retournées vers l'arrière de l'écran tactile sont supérieurs ou égaux à un quatrième angle prédéfini.

10. Dispositif électronique selon l'une quelconque des revendications 1 à 8, dans lequel lorsque le code est exécuté par les un ou plusieurs processeurs, le dispositif électronique est également en mesure de réaliser les étapes suivantes :
après l'affichage de la première interface multitâche, si une opération de suppression de toutes les cartes est détectée, retournement successif de la première carte, de la deuxième carte et de la troisième carte vers l'arrière de l'écran tactile dans un ordre prédéfini en réponse à l'opération de suppression de toutes les cartes, dans lequel
dans un processus au cours duquel la première carte, la deuxième carte et la troisième carte sont retournées vers l'arrière de l'écran tactile, un contenu de la première carte, de la deuxième carte et de la troisième carte est orienté vers le haut ; et suppression successive de la première carte, de la deuxième carte et de la troisième carte après que des angles selon lesquels la première carte, la deuxième carte et la troisième carte sont retournées vers l'arrière de l'écran tactile sont supérieurs ou égaux à un quatrième angle prédéfini.

11. Dispositif électronique selon la revendication 9 ou 10, dans lequel, lorsque le code est exécuté par les un ou plusieurs processeurs, le dispositif électronique est également en mesure de réaliser l'étape suivante :
après la suppression de la première carte, de la deuxième carte et de la troisième carte, fermeture d'applications correspondant à toutes les cartes et libération de ressources occupées en arrière-plan par les applications correspondant à toutes les cartes, dans lequel les ressources comprennent une mémoire.

12. Dispositif électronique selon l'une quelconque des revendications 9 à 11, dans lequel lorsque le code est exécuté par les un ou plusieurs processeurs, le dispositif électronique est également en mesure de réaliser l'étape suivante :
affichage de l'écran d'accueil après la suppression de la première carte, de la deuxième carte et de la troisième carte.
